# EUROPEAN PATENT SPECIFICATION

(11) **EP 4 113 698 B1**
(45) Date of publication and mention of the grant of the patent: **28.05.2025**
(21) Application number: 22179694.9
(22) Date of filing: 17.06.2022
(51) Int. Cl.: H01M 10/42

(54) **AN APPARATUS FOR THE ELECTRICAL INTERCONNECTION OF A PLURALITY OF ELECTRIC BATTERY CELL UNITS**
VORRICHTUNG FÜR DIE ELEKTRISCHE VERBINDUNG EINER MEHRZAHL VON ELEKTRISCHEN BATTERIEZELLENEINHEITEN
APPAREIL D'INTERCONNEXION ÉLECTRIQUE D'UNE PLURALITÉ D'UNITÉS D'ÉLÉMENT DE BATTERIE ÉLECTRIQUE

(30) Priority: 30.06.2021 SE 2150844
(43) Date of publication of application: 04.01.2023
(73) Proprietor: Scania CV AB, 151 87 Södertälje (SE)
(72) Inventor: HELLSING, Robin, 633 58 Eskilstuna (SE); TSYCHKOV, Alexei, 191 47 Sollentuna (SE)
(74) Representative: Scania CV AB

(56) References cited:
- DE-T5- 112018 008 015
- US-A1- 2015 214 531
- US-A1- 2015 221 912
- US-A1- 2019 044 119
- US-B1- 10 158 187

## Description

### Technical field

Aspects of the present invention relate to an apparatus for the electrical interconnection of a plurality of electric battery cell units. Further, aspects of the present invention relate to a vehicle electrical system comprising an apparatus of the above-mentioned sort.

### Background

An electric battery cell can be seen as a container chemically storing energy. The electric battery cells may come in various forms and shapes. The electric battery cells may be connected in series and in parallel, into an electric battery arrangement, which may be called an electric battery pack, in order to attain the desired voltage and energy capacity. A conventional electric battery pack may be the complete enclosure or entity that delivers electric power to a product or equipment, for example an electric vehicle, such as a battery electric vehicle or a hybrid electric vehicle. In general, a conventional electric battery pack includes or contains electric battery cells, a control or management system, which may be called a battery management system (BMS) and may, for example, be implemented partly as software, and often also a cooling and/or heating system. Conventionally, the electric battery cells of an electric battery pack may be arranged in modules to attained serviceable units. A conventional module may be a frame holding a plurality of electric battery cells, and a conventional electric battery pack is assembled by interconnecting the modules.

US 2015221912 describes a battery unit for a motor vehicle which has battery modules in a battery housing. The battery housing has an opening and an electrically conductive element can be inserted through the opening for electrically conductively connecting a first electrical connection of a battery module of the housing to a second electrical connection of a battery module of the housing.

### Summary

The inventors of the present invention have found drawbacks in conventional solutions for arranging and mounting electric battery cells, electric battery modules and electric battery packs. For example, the inventors of the present invention have found that some conventional arrangements of conventional electric battery cells, modules and packs are complicated to install and/or too bulky.

An object of the invention is to provide a solution which mitigates or solves the drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with an apparatus for the electrical interconnection of a plurality of electric battery cell units,
wherein the apparatus comprises inter alia a housing forming, or defining, at least one room for housing the plurality of electric battery cell units,
wherein the apparatus comprises one or more electrical conductors for the electrical connection of one electric battery cell unit of the plurality of electric battery cell units to another electric battery cell unit of the plurality of electric battery cell units,
wherein the housing comprises one or more walls,
wherein the at least one room is defined by the one or more walls, and
wherein the wall comprises, or forms, one or more seats for holding the electrical conductor.

An advantage of the apparatus according to the first aspect is that the process of arranging and mounting electric battery cells in order to construct an electric battery arrangement, for example an electric battery pack is facilitated, improved and made more efficient. An advantage of the apparatus according to the first aspect is that a robust and improved electric battery arrangement including several connected electric battery cells is provided. An advantage of the apparatus according to the first aspect is that a secure and robust electrical connection between electric battery cells is provided since the one or more seats efficiently holds the electrical conductor in a secure position. An advantage of the apparatus according to the first aspect is that an electric battery arrangement, which includes several interconnected electric battery cells, with a compact design, or configuration, but with a maintained or increased electric capacity is provided. Thus, an advantage of the apparatus according to the first aspect is that the electrical performance, or capacity, of an electric battery arrangement, which includes several interconnected electric battery cells, is enhanced without increasing the overall size of the electric battery arrangement. An advantage of the apparatus according to the first aspect is that the efficiency of an electric battery arrangement, which includes several interconnected electric battery cells, is improved. An advantage of the apparatus according to the first aspect is that the components of the apparatus and the apparatus per se are uncomplicated to manufacture.

The one or more electrical conductors may be configured for high voltage, such as a voltage above 60 V, for example above 400 V, such as above 650 V. For example, the one or more electrical conductors may be configured for a voltage up to 1500 V, or a voltage above 1500 V. The one or more electrical conductors may be configured for direct current. The plurality of electric battery cell units may be configured for high voltage, such as a voltage above 60 V, for example above 400 V, such as above 650 V. For example, the plurality of electric battery cell units may be configured for a voltage up to 1500 V, or a voltage above 1500 V. For some embodiments, the plurality of electric battery cell units may be configured for the propulsion of a vehicle, for example a vehicle of any one of the sorts mentioned hereinbelow.

According to an advantageous embodiment of the apparatus according to the first aspect, the wall has an inner side, or inside, facing the room,
wherein the wall has an outer side, or outside, facing away from the room, and
wherein the inner side of the wall comprises, or forms, the one or more seats. An advantage of this embodiment is that the one or more electrical conductors are protected from the environment outside the housing, and the environment outside the housing is safely protected from the one or more electrical conductors. For example, users or operators, for example involved in maintenance, are protected from the one or more electrical conductors. An advantage of this embodiment is that a further improved electrical connection of electric battery cells is provided. An advantage of this embodiment is that a further improved electric battery arrangement, which includes several interconnected electric battery cells, with a compact design, or configuration, is provided. An advantage of this embodiments is that a robust and improved electric battery arrangement including several interconnected electric battery cells is provided. For some embodiments, it may be defined that the housing houses the one or more electrical conductors, or it may be defined that the room houses the one or more electrical conductors.

According to a further advantageous embodiment of the apparatus according to the first aspect, the electrical conductor is configured for the electrical interconnection of electric battery cell units of the plurality of electric battery cell units which belong to different electric battery layers. An advantage of this embodiment is that a further improved electrical connection of electric battery cells is provided. By way of this embodiment, electric battery layers, which each includes a plurality of electric battery cells, may be assembled and interconnected separately, and subsequently, the electric battery layers may be electrically interconnected by way of this embodiment. An advantage of this embodiment is that a further improved electric battery arrangement, which includes several interconnected electric battery cells, with a compact design, or configuration, is provided. An advantage of this embodiment is that the flexibility in arranging and connecting electrical conductors between different electric battery layers is improved. For example, electrical conductors connected between different electric battery layers may be arranged such that the electrical conductors do not cross one another and/or are not positioned too close to one another, whereby the risk of short-circuit between electrical conductors is reduced, which increases safety and electrical performance. For some embodiments, it may be defined that each one of the electric battery layers comprises a plurality of electric battery cell units.

According to another advantageous embodiment of the apparatus according to the first aspect, the apparatus comprises two or more electrical conductors electrically connectable to one another,

wherein the two or more electrical conductors are configured for the electrical interconnection of electric battery cell units of the plurality of electric battery cell units which belong to different electric battery layers.

An advantage of this embodiment is that the flexibility of the connection and assembly of electric battery cells is improved because of the modular concept of using two or more electrical conductors, since additional electric battery cells or additional electric battery layers can be added and connected when required or desired. Thus, the number of electrical conductors can be adapted to the number of electric battery cell units, or to the number of electric battery layers, to be connected in a modular manner. Thus, as a consequence, the overall cost for the electrical installation may be reduced. The modular manner in this context is to be understood as using a plurality of electrical conductors for flexibility instead of using only one electrical conductor.

According to yet another advantageous embodiment of the apparatus according to the first aspect, the two or more electrical conductors are attachable to one another. An advantage of this embodiment is that the electrical connection or connections between electric battery cells and/or electric battery layers is/are made further secure and robust. An advantage of this embodiment is that a further improved electrical interconnection of electric battery cells and/or electric battery layers is provided. An advantage of this embodiment is that a further improved electric battery arrangement, which includes several interconnected electric battery cells, is provided.

According to still another advantageous embodiment of the apparatus according to the first aspect, the two or more electrical conductors are detachably attachable to one another. An advantage of this embodiment is that the flexibility of the connection and assembly of electric battery cells is further improved. For example, additional electric battery cells and/or additional electric battery layers may be easily added and connected, since two or more already used electrical conductors may be easily detached for the connection of one or more additional electrical conductors.

According to an advantageous embodiment of the apparatus according to the first aspect, the two or more electrical conductors are configured for adjoining one another. An advantage of this embodiment is that a further improved electrical interconnection of electric battery cells and/or electric battery layers is provided. An advantage of this embodiment is that a further improved electric battery arrangement, which includes several interconnected electric battery cells, is provided. In this context and for this embodiment, "adjoining one another" implies a direct physical contact, for example without any intermediate member or intermediate electrically conductive member.

According to a further advantageous embodiment of the apparatus according to the first aspect, the wall forms an opening for receiving an attachment member configured to attach two or more electrical conductors to one another. An advantage of this embodiment is that, when the two or more electrical conductors are located on the inside of the housing or the housing houses the two or more electrical conductors, is that the two electrical conductors can be easily connected, electrically connected, and/or secured, to one another from the outside of the housing. An advantage of this embodiment is that a facilitated and/or further improved electrical interconnection of electric battery cells and/or electric battery layers is provided. An advantage of this embodiment is that a further improved electric battery arrangement, which includes several interconnected electric battery cells, is provided. For some embodiments it may be defined that the attachment member is configured to secure physical contact between two or more electrical conductors.

The housing comprises two or more housing units,
wherein each one of the two or more housing units forms, or defines, at least one room for housing a plurality of electric battery cell units,
wherein each one of the two or more housing units comprises one or more walls,
wherein the at least one room of the housing unit is defined by the one or more walls of the housing unit, and
wherein the wall of each one of the two or more housing units comprises one or more seats for holding the electrical conductor.

Thereby the flexibility of the connection and assembly of electric battery cells and/or electric battery layers is improved because of the modular concept of using two or more housing units, since, when required or desired, additional electric battery cells or additional electric battery layers can be added and housed by the housing, which may be built up by the two or more housing units. Thus, the number of housing units can be adapted to the number of electric battery cell units or electric battery layers to be connected. Thus, as a consequence, the overall cost for the electrical installation may be reduced. The modular manner in this context is to be understood as using a plurality of housing units for flexibility instead of using only one integrally formed housing. An advantage of this is that a facilitated and/or further improved electrical interconnection of electric battery cells and/or electric battery layers is provided.

According to yet another advantageous embodiment of the apparatus according to the first aspect, the two or more housing units are attachable to one another. An advantage of this embodiment is that the electrical connection or connections between electric battery cells and/or electric battery layers is/are made further secure and robust. An advantage of this embodiment is that a facilitated and/or further improved electrical interconnection of electric battery cells and/or electric battery layers is provided. An advantage of this embodiment is that a further improved electric battery arrangement, which includes several interconnected electric battery cells, is provided.

According to still another advantageous embodiment of the apparatus according to the first aspect, the two or more housing units are detachably attachable to one another. An advantage of this embodiment is that the flexibility of the connection and assembly of electric battery cells and/or electric battery layers is further improved. For example, additional electric battery cells and/or electric battery layers may be easily added and housed by the overall housing, since two or more already used housing units may be easily detached for the connection of one or more additional housing units.

According to an advantageous embodiment of the apparatus according to the first aspect, the two or more housing units are configured for adjoining one another. An advantage of this embodiment is that a further improved electrical connection of electric battery cells and/or electric battery layers is provided. An advantage of this embodiment is that a further improved electric battery arrangement, which includes several interconnected electric battery cells, is provided. In this context and for this embodiment, "adjoining one another" implies a direct physical contact, for example without any intermediate member or element.

According to a further advantageous embodiment of the apparatus according to the first aspect, each one of the two or more housing units forms an opening for receiving an attachment member configured to attach two or more electrical conductors to one another.

An advantage of this embodiment is that the flexibility of the connection and assembly of electric battery cells and/or electric battery layers is further improved because of the further developed modular concept of using two or more housing units each having an opening for receiving an attachment member configured to attach two or more electrical conductors to one another. An advantage of this embodiment is that a further facilitated and/or further improved electrical connection of electric battery cells and/or electric battery layers is provided when two or more housing units are involved. For some embodiments it may be defined that the attachment member is configured to secure physical contact between two or more electrical conductors.

The seat forms a compartment for holding the electrical conductor. An advantage of this is that the process of arranging and mounting electric battery cells in order to construct an electric battery arrangement, for example an electric battery pack is further facilitated and further improved and made even more efficient. An advantage of this is that a further improved electric battery arrangement including several interconnected electric battery cells is provided. An advantage of this is that a further secure and further robust electrical connection between electric battery cells is provided since the one or more compartments efficiently holds the one or more electrical conductors in a secure position. An advantage of this is that an electric battery arrangement, which includes several interconnected electric battery cells, with a compact design, or configuration, but with a maintained or increased electric capacity is provided. Thus, an advantage of this is that the electrical performance or capacity of an electric battery arrangement, which includes several interconnected electric battery cells, is further enhanced without increasing the overall size of the electric battery arrangement. An advantage of this is that the efficiency of an electric battery arrangement, which includes several interconnected electric battery cells, is further improved.

According to yet another advantageous embodiment of the apparatus according to the first aspect, the electrical conductor comprises a first electrically conductive member and one or more second electrically conductive members,
wherein the first electrically conductive member is configured for the electrical interconnection of electric battery cell units of the plurality of electric battery cell units which belong to different electric battery layers, and
wherein the one or more second electrically conductive members is/are configured to electrically connect one electric battery cell unit of the plurality of electric battery cell units to the first electrically conductive member.

An advantage of this embodiment is that the flexibility of the connection and assembly of electric battery cells is further improved. An advantage of this embodiment is that an improved electrical connection of electric battery cells and/or electric battery layers is provided. An advantage of this embodiment is that a further facilitated process of electrically connecting electric battery cells and/or electric battery layers is provided. An advantage of this embodiment is that a further improved electric battery arrangement, which includes several interconnected electric battery cells, with a compact design, or configuration, but with a maintained or increased electric capacity is provided.

According to yet another advantageous embodiment of the apparatus according to the first aspect, the first electrically conductive member has a longitudinal extension,
wherein each one of the one or more second electrically conductive members has a longitudinal extension,
wherein the longitudinal extension of the first electrically conductive member extends in a first direction,
wherein the longitudinal extension of the one or more second electrically conductive members extends in one or more second directions transverse to the first direction.

An advantage of this embodiment is that the flexibility of the connection and assembly of electric battery cells is further improved. An advantage of this embodiment is that an improved electrical interconnection of electric battery cells and/or electric battery layers is provided. An advantage of this embodiment is that a further facilitated process of electrically connecting electric battery cells and/or electric battery layers is provided. An advantage of this embodiment is that a further improved electric battery arrangement, which includes several interconnected electric battery cells, with a compact design, or configuration, but with a maintained or increased electric capacity is provided.

According to an advantageous embodiment of the apparatus according to the first aspect, the apparatus comprises one or more tubular members at least partially made of an electrically insulating material,
wherein the tubular member at least partially surrounds the electrical conductor.

An advantage of this embodiment is that a further secure and robust electrical connection of electric battery cells and/or electric battery layers is provided. An advantage of this embodiment is that the environment is safely protected from the one or more electrical conductors. For example, users or operators, for example involved in maintenance, are protected from the one or more electrical conductors. An advantage of this embodiment is that an improved electrical connection of electric battery cells and/or electric battery layers is provided. An advantage of this embodiment is that further improved electric battery arrangement including several interconnected electric battery cells is provided.

According to an advantageous embodiment of the apparatus according to the first aspect, the one or more electrical conductors is/are configured for the electrical interconnection of electric battery cell units, each one of the electric battery cell units including a plurality of electric battery cells. An advantage of this embodiment is that a secure and robust electrical connection of electric battery cells, electric battery modules and/or electric battery layers is provided.

According to a second aspect of the invention, the above mentioned and other objects are achieved with a vehicle electrical system comprising one or more apparatuses according to any one of the embodiments mentioned above or below.

Advantages of the vehicle electrical system according to the second aspect and its embodiments correspond to the above- or below-mentioned advantages of apparatus according to the first aspect and its embodiments.

According to an advantageous embodiment of the vehicle electrical system according to the second aspect, the vehicle electrical system comprises the plurality of electric battery cell units.

According to a further advantageous embodiment of the vehicle electrical system according to the second aspect, the vehicle electrical system is a vehicle high voltage system. The vehicle electrical system may be configured for direct current. The vehicle electrical system may be configured for high voltage, such as a voltage above 60 V, for example above 400 V, such as above 650 V. For example, the vehicle electrical system may be configured for a voltage up to 1500 V, or a voltage above 1500 V.

According to a third aspect of the invention, the above mentioned and other objects are achieved with a vehicle comprising one or more of the group of:
- An apparatus according to any one of the above- or below-mentioned embodiments; and
- a vehicle electrical system according to any one of the above- or below-mentioned embodiments.

Advantages of the vehicle according to the third aspect and its embodiments correspond to the above- or below-mentioned advantages of the apparatus according to the first aspect and its embodiments.

The vehicle may be a wheeled vehicle, i.e. a vehicle having wheels. The vehicle may for example be a bus, a tractor vehicle, a heavy vehicle, a truck, or a car. The tractor vehicle, and/or the truck, may, or may be configured to, haul, or pull, a trailer. However, other types of vehicles are possible. The vehicle may be referred to as a motor vehicle. The vehicle may be an electric vehicle, EV, for example a hybrid vehicle or a hybrid electric vehicle, HEV, or a battery electric vehicle, BEV. Thus, a hybrid electric vehicle, HEV, and a battery electric vehicle, BEV, are versions, or examples, of an electric vehicle, EV. The EV may comprise one or more electric machines or electrical motors. The vehicle may comprise a combustion engine. For some embodiments, the vehicle may include only a combustion engine for the propulsion of the vehicle.

The vehicle may comprise a powertrain. The powertrain may be configured in accordance with any one of the embodiments disclosed above or below. The powertrain of the vehicle may comprise one or more of the group of: a combustion engine; one or more electric battery cells; an electric battery arrangement; and an electric battery pack.

The above-mentioned features and embodiments of the apparatus, the vehicle electrical system and the vehicle, respectively, may be combined in various possible ways providing further advantageous embodiments.

Further advantageous embodiments of the apparatus, the vehicle electrical system and the vehicle according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic perspective view of a first embodiment of the apparatus according to the first aspect of the invention;
- Figure 2: is an exploded schematic perspective view of embodiments of the electrical conductors of the apparatus of figure 1;
- Figure 3: is a schematic perspective view of the electrical conductors of figure 2 in an assembled state provided with additional items;
- Figure 4: is an exploded schematic perspective view of other embodiments of the electrical conductors;
- Figure 5: is a schematic partial perspective view of the inside of the housing of the apparatus of figure 1;
- Figure 6: is a schematic partial perspective view of the inside of the housing of figure 5 housing a plurality of electric battery cell units;
- Figure 7: is a schematic partial perspective view of the housing of figure 6 provided with an embodiment of the electrical conductor and a schematic partial perspective view the first embodiment of the apparatus according to the first aspect;
- Figure 8: is a schematic partial perspective view of the housing of figure 7 provided with an additional housing unit;
- Figure 9: is a schematic partial perspective view of the housing of figure 8 provided with additional items;
- Figure 10: is an enlargement of a portion the electrical conductor of figure 9 in the region A of figure 9;
- Figure 11: is a schematic partial perspective view of the inside of the housing of figure 9 provided with an additional layer of electric battery cell units;
- Figure 12: is a schematic partial perspective view of the housing of figure 11, wherein the provision of an embodiment of the electrical conductor is schematically illustrated;
- Figure 13: is a schematic partial perspective view of the housing of figure 11, wherein the electrical conductor detached in figure 12 is put in place and a schematic partial perspective view the first embodiment of the apparatus according to the first aspect;
- Figure 14: is a schematic partial perspective view of the apparatus of figure 13 supplemented with an additional electrical conductor;
- Figure 15: is a schematic partial perspective view of the apparatus of figure 14 schematically illustrating the provision of an attachment element;
- Figure 16: is a schematic partial perspective view of the apparatus of figure 15, wherein the attachment element detached in figure 15 is put in place;
- Figure 17: is a schematic partial perspective view of the inside of the housing and of the first embodiment of the apparatus of figures 1 and 7 to 16 but with the plurality of electric battery cell units removed for illustrative purposes;
- Figure 18: is a schematic partial perspective view of a second embodiment of the apparatus according to the first aspect of the invention and of the inside of a housing of the apparatus but with the plurality of electric battery cell units removed for illustrative purposes;
- Figure 19: is an exploded schematic partial perspective view of a third embodiment of the apparatus according to the first aspect of the invention;
- Figure 20: is a schematic partial perspective view of the apparatus of figure 19 with the electrical conductor detached in figure 19 put in place;
- Figure 21: is a schematic partial perspective view of the apparatus of figure 20 in a partially transparent state for illustrative purposes, wherein the provision of an additional housing unit is schematically illustrated;
- Figure 22: is an exploded schematic partial perspective view of the apparatus of figure 21 in a partially transparent state for illustrative purposes, wherein the provision, the receipt and the attachment of an attachment member via an opening of the wall of the housing are schematically illustrated;
- Figure 23: is a schematic partial perspective view of embodiments of electrical conductors of an embodiment of the apparatus according the first aspect of the invention in an assembled state;
- Figure 24: is a schematic partial perspective view of the electrical conductors of figure 23 provided with electrical insulators;
- Figure 25A-B: are schematic circuit diagrams illustrating an assembled and electrically interconnected embodiment of the apparatus according the first aspect of the invention;
- Figure 26: is a schematic diagram illustrating an example of an electric battery cell unit;
- Figure 27: is a schematic diagram illustrating an example of an electric battery pack of a vehicle; and
- Figure 28: schematically illustrates an embodiment of the vehicle electrical system according to the second aspect of the invention and an embodiment of the vehicle according to the third aspect of the invention.

### Detailed Description

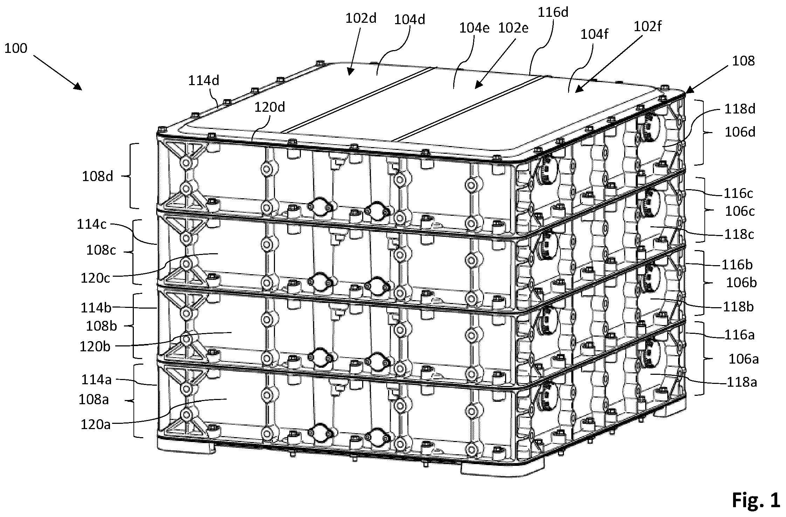

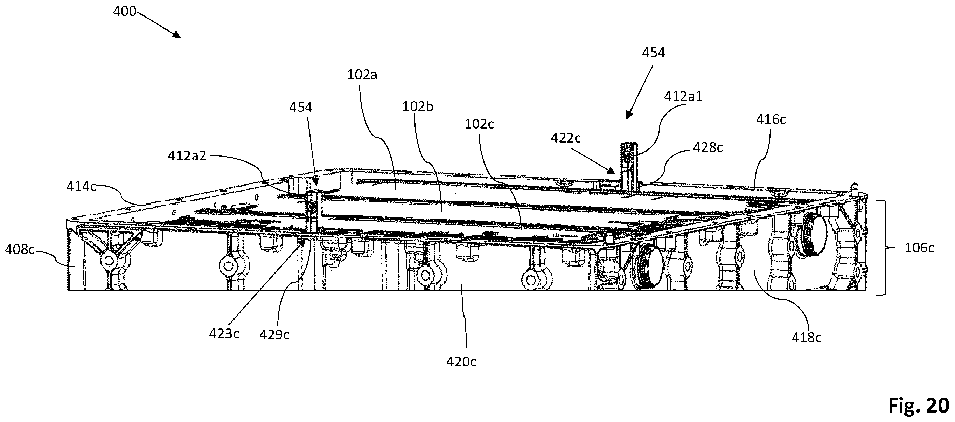

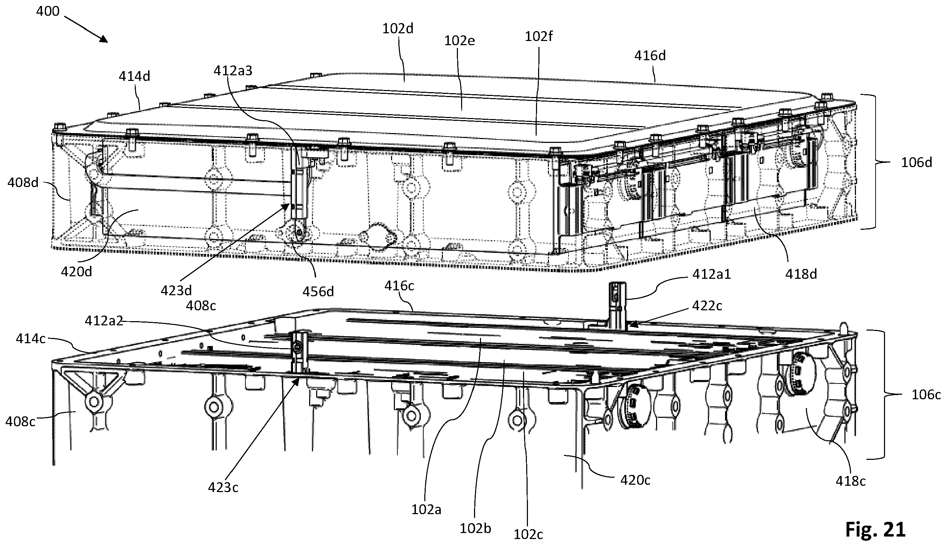

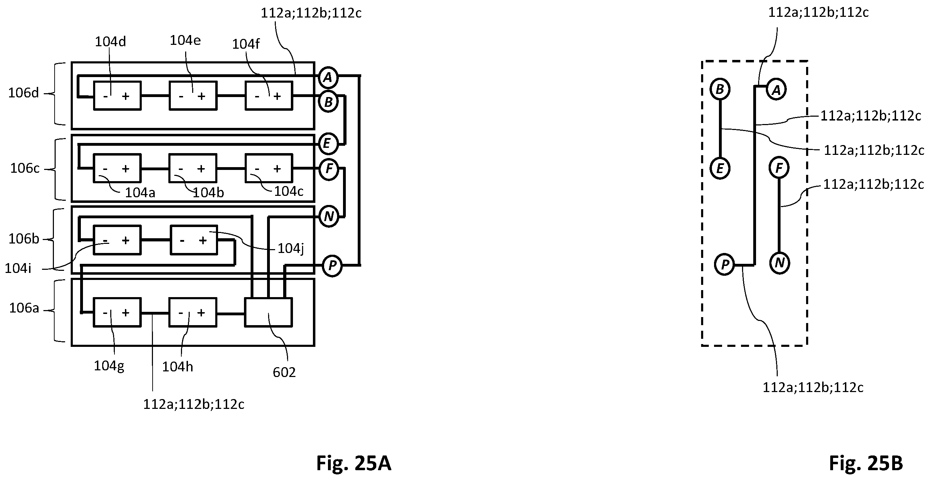

With reference to figures 1 to 17, a first embodiment of the apparatus 100 for the electrical interconnection of a plurality of electric battery cell units 102a, 102b, 102c (see figures 20 and 21 for the electric battery cell unit 102c), 102d, 102e, 102f according to the first aspect of the invention is schematically illustrated. The electric battery cell unit 102a, 102b, 102c, 102d, 102e, 102f may comprise or consist of one or more of the group of: an electric battery cell; an electric battery module 104a, 104b, 104c (see figure 25A for the electric battery module 104c), 104d, 104e, 104f; an electric battery layer 106a, 106b, 106c, 106d; and an electric battery pack. Each one of the electric battery module 104a, 104b, 104c, 104d, 104e, 104f, the electric battery layer 106a, 106b, 106c, 106d and the electric battery pack may be described to comprise a plurality of electric battery cells, i.e. two or more electric battery cells. The electric battery cells of the plurality of electric battery cells of each one of the electric battery module 104a, 104b, 104c, 104d, 104e, 104f, the electric battery layer 106a, 106b, 106c, 106d and the electric battery pack may be described to be electrically interconnected, or electrically connected to one another. For some embodiments and for the embodiment of figures of 1 to 17, a plurality of electric battery modules 104a, 104b, 104c, 104d, 104e, 104f may be located in, or may belong to, different electric battery layers 106a, 106b, 106c, 106d. For some embodiments, electric battery cell units 102a, 102b, 102c, 102d, 102e, 102f of the plurality of electric battery cell units 102a, 102b, 102c, 102d, 102e, 102f may belong to different electric battery layers 106a, 106b, 106c, 106d.

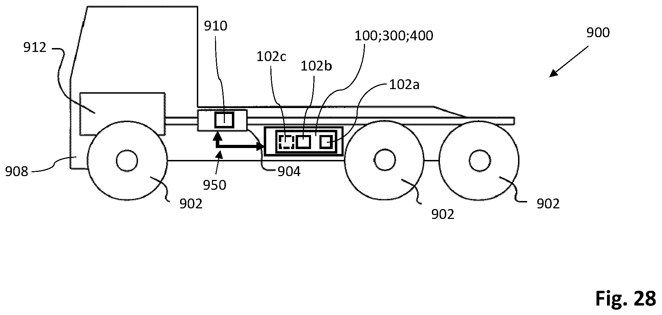

With reference to figures 1 to 17, the plurality of electric battery cell units 102a, 102b, 102c, 102d, 102e, 102f may be configured for high voltage, such as a voltage above 60 V, for example above 400 V, such as above 650 V. For example, the plurality of electric battery cell units 102a, 102b, 102c, 102d, 102e, 102f may be configured for a voltage up to 1500 V, or a voltage above 1500 V. For some embodiments, the plurality of electric battery cell units 102a, 102b, 102c, 102d, 102e, 102f may be configured for the propulsion of a vehicle 900 (see figure 28), for example a vehicle 900 of any one of the sorts or embodiments mentioned above or hereinbelow in connection with figure 28.

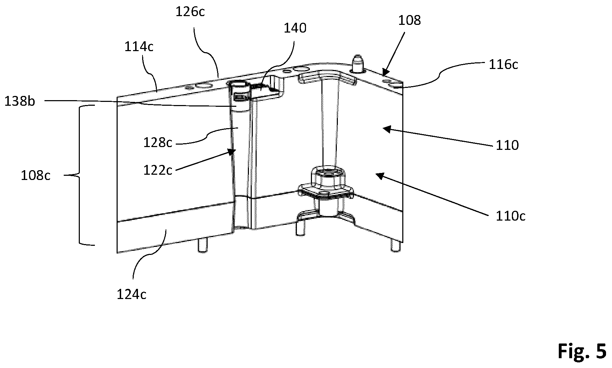

With reference to figures 1 to 17, the apparatus 100 includes a housing 108 forming, or defining, at least one room 110 for housing the plurality of electric battery cell units 102a, 102b, 102c, 102d, 102e, 102f. For some embodiments, it may be defined that one or more of the housing 108 and room 110 is/are configured to hold the plurality of electric battery cell units 102a, 102b, 102c, 102d, 102e, 102f. Further, the apparatus 100 includes one or more electrical conductors 112a, 112b, 112c for the electrical connection of one electric battery cell unit 102a, 102b, 102c, 102d, 102e, 102f of the plurality of electric battery cell units 102a, 102b, 102c, 102d, 102e, 102f to another electric battery cell unit 102a, 102b, 102c, 102d, 102e, 102f of the plurality of electric battery cell units 102a, 102b, 102c, 102d, 102e, 102f. The housing 108 comprises one or more walls 114a-d, 116a-d, 118a-d, 120a-d. The at least one room 110 is defined by the one or more walls 114a-d, 116a-d, 118a-d, 120a-d. With reference to figures 5 to 17, the wall 114c, 114d comprises, or forms, one or more seats 122c, 122d, for holding the electrical conductor 112a, 112b, 112c. In the illustrated embodiment, the housing 108 comprises four walls 114a-d, 116a-d, 118a-d, 120a-d. In the illustrated embodiment, the housing 108 has the shape of a parallelepiped, for example a rectangular parallelepiped or a rectangular cuboid. In the illustrated embodiment, in general, the housing 108 may be described to have a rectangular cross section. For alternative embodiments, the housing may be circular cylindrical and comprise one wall. For some embodiments, the cylinder of the housing may be oval.

With reference to figures 1 to 17, for some embodiments, it may be defined that the housing 108 houses the one or more electrical conductors 112a, 112b, 112c, or it may be defined that the room 110 houses the one or more electrical conductors 112a, 112b, 112c.

With reference to figures 1 and 5 to 17, for some embodiments, the housing 108 may include two or more housing units 108a-d. In the embodiment illustrated in figure 1, the housing 108 includes four housing units 108a-d. However, it is to be understood that the housing 108 may include fewer or more housing units 108a-d than four. Each one 108a-d of the two or more housing units 108a-d forms, or defines, at least one room 110c, 110d for housing a plurality of electric battery cell units 102a, 102b, 102c, 102d, 102e, 102f. For some embodiments, it may be defined that one or more of the housing unit 108a-d and room 110c, 110c of the housing unit 108a-d is/are configured to hold electric battery cell units 102a, 102b, 102c, 102d, 102e, 102f of the plurality of electric battery cell units 102a, 102b, 102c, 102d, 102e, 102f. Each one 108a-d of the two or more housing units 108a-d includes one or more walls 114a-d, 116a-d, 118a-d, 120a-d. The at least one room 110c, 110d of the housing unit 108a-d is defined by the one or more walls 114a-d, 116a-d, 118a-d, 120a-d of the housing unit 108a-d. The wall 114a-d, 116a-d, 118a-d, 120a-d of each one 108a-d of the two or more housing units 108a-d includes one or more seats 122c, 122d for holding the electrical conductor 112a, 112b, 112c.

With reference to figures 1 and 5 to 17, for some embodiments, the two or more housing units 108a-d are attachable to one another. For some embodiments, the two or more housing units 108a-d are detachably attachable to one another. For some embodiments, the two or more housing units 108a-d are configured to adjoin one another, i.e. configured for direct physical contact with one another, for example without any intermediate structure or element. For some embodiments, it may be defined that the two or more housing units 108a-d are configured for physical contact, for example direct physical contact, with one another. It may be defined that the two or more housing units 108a-d are configured to be joined.

With reference to figures 5 to 17, for some embodiments, the wall 114c, 114d has an inner side 124c, 124d, or an inside, facing the room 110c, 110d. The wall 114c, 114d may have an outer side 126c, 126d, or an outside, facing away from the room 110c, 110d. For some embodiments, the inner side 124c, 124d may include, or form, the one or more seats 122c, 122d. For some embodiments, the seat 122c, 122d may form, or may comprise, a compartment 128c, 128d for holding the electrical conductor 112a, 112b, 112c. For some embodiments, the seat 122c, 122d may comprise one or more of the group of: a part of the wall 114c, 114d; a portion of the wall 114c, 114d; a base of the wall 114c, 114d; and a surface of the wall 114c, 114d. For some embodiments, the room 110, which is configured to house the plurality of electric battery cell units 102a, 102b, 102c, 102d, 102e, 102f, may be referred to as a second compartment, or an electric battery cell unit compartment. For some embodiments, the room 110, which is configured to house the plurality of electric battery cell units 102a, 102b, 102c, 102d, 102e, 102f, may be referred to as a space.

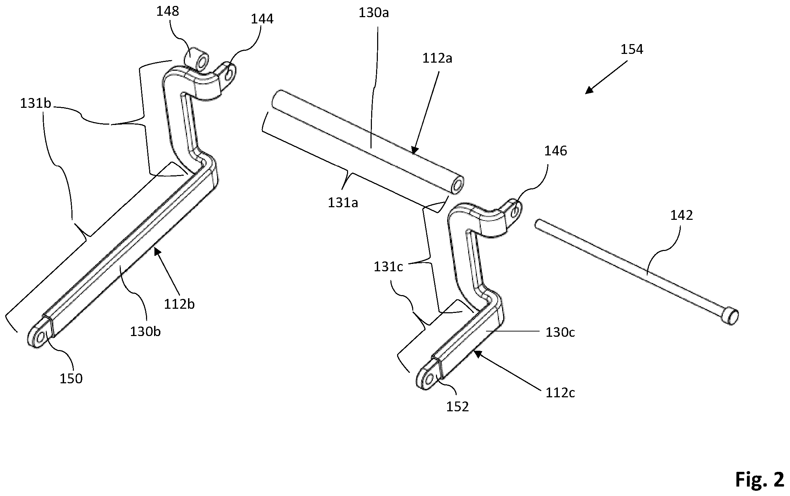

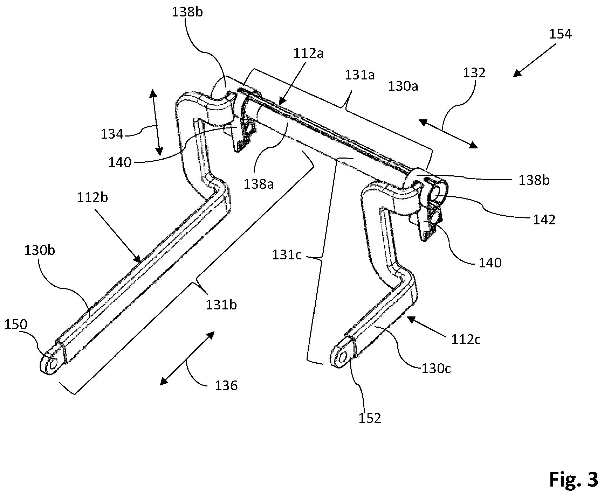

With reference to figures 2 and 3, first embodiments of the one or more electrical conductors 112a, 112b, 112c are schematically illustrated. In figure 2, the electrical conductors 112a, 112b, 112c are illustrated in an unassembled, or detached, state, while in figure 3 the electrical conductors 112a, 112b, 112c are illustrated in an assembled, or attached, state. With reference to figure 2, for some embodiments, the apparatus 100 may include two or more electrical conductors 112a, 112b, 112c electrically connectable to one another. In the embodiment illustrated in figures 2 and 3, the apparatus 100 includes three or more electrical conductors 112a, 112b, 112c. Each one of the one or more electrical conductors 112a, 112b, 112c may be made of, or may comprise, any suitable electrically conductive material, such as a material comprising or consisting of a metal or a metal alloy, for example copper, brass, or aluminum. However, other materials are possible.

With reference to figure 2, the one or more electrical conductors 112a, 112b, 112c may include a first electrically conductive member 130a configured to be held by the seat 122c, 122d. The first electrically conductive member 130a may be elongated. The first electrically conductive member 130a may be tubular, or hollow. The outer shape of the first electrically conductive member 130a may be cylindrical, for example circular cylindrical. However, other shapes of the first electrically conductive member 130a are possible. The one or more electrical conductors 112a, 112b, 112c may include one or more second electrically conductive members 130b, 130c. The second electrically conductive member 130b, 130c may comprise or consist of a busbar. In the embodiment illustrated in figures 2 and 3, two second electrically conductive members 130b, 130c are provided, and each one of the two second electrically conductive members 130b, 130c are angled.

With reference to figure 3, the first electrically conductive member 130a may be described to have a longitudinal extension 131a. Each one 130b, 130c of the one or more second electrically conductive members 130b, 130c may be described to have a longitudinal extension 131b, 131c. The longitudinal extension 131a of the first electrically conductive member 130a may extend in a first direction 132 while the longitudinal extension 131b, 131c of the one or more second electrically conductive members 130b, 130c may extend in one or more second directions 134, 136 transverse, or substantially transverse, to the first direction 132. For some embodiments, the apparatus 100 may include one or more tubular members 138a, 138b at least partially made, or entirely made, of an electrically insulating material. The electrically insulating material may comprise or consist of a polymer or a polymer composite. However, other electrically insulating materials are possible. When the apparatus 100 includes the one or more tubular members 138a, 138b, the tubular member 138a, 138b at least partially surrounds the electrical conductor 112a. In the illustrated embodiment, the apparatus 100 includes three tubular members 138a, 138b. A first tubular member 138a of the one or more tubular members 138a, 138b is elongated and surrounds substantially the entire first electrically conductive member 130a. One second tubular member 138b of the one or more tubular members 138a, 138b is configured to cover the electrical contact between the first electrically conductive member 130a and one 130b of the one or more second electrically conductive members 130b, 130c while another second tubular member 138b of the one or more tubular members 138a, 138b is configured to cover the electrical contact between the first electrically conductive member 130a and the other one 130c of the one or more second electrically conductive members 130b, 130c. Further, each second tubular member 138b may comprise an arm 140 for positioning, and/or mounting, the second tubular member 138b in relation to the seat 122c, 122d and/or the wall 114a-d, 116a-d, 118a-d, 120a-d.

With reference to figures 2 and 3, for some embodiments, the two or more electrical conductors 112a, 112b, 112c may be attachable to one another, for example by way of one or more attachments of one or more of the group of: a thread attachment; a friction attachment; a positive locking attachment; a bayonet attachment; a snap-on attachment; a snap-in attachment. In the embodiment illustrated in figures 2 and 3, the two or more electrical conductors 112a, 112b, 112c are attachable to one another via threads, or thread attachments, more specifically by way of a threaded attachment element 142, for example in the form of a rod, configured to engage and extend through the tubular first electrically conductive member 130a and extend through openings 144, 146 of, or formed by, the second electrically conductive members 130b, 130c. The threaded attachment element 142 may be configured for engagement with and attachment to a nut 148. However, it is to be understood that other attachments, or means of attachment, are possible. For some embodiments, the two or more electrical conductors 112a, 112b, 112c may be detachably attachable to one another. For some embodiments, the two or more electrical conductors 112a, 112b, 112c are configured to adjoin one another, i.e. configured for direct physical contact with one another, for example without any intermediate electrical conductor. For some embodiments, it may be defined that the two or more electrical conductors 112a, 112b, 112c are configured for physical contact, for example direct physical contact, with one another. It may be defined that the two or more electrical conductors 112a, 112b, 112c are configured to be joined.

With reference to figures 2 and 3, for some embodiments, each one 130b, 130c of the second electrically conductive members 130b, 130c may include an electrical contact 150, 152 and/or an attachment 150, 152 for the attachment to and/or the electrical contact with an electric battery cell unit 102a, 102b, 102c, 102d, 102e, 102f, for example an electrical contact, such as a terminal or a pole, of the electric battery cell unit 102a, 102b, 102c, 102d, 102e, 102f.

With reference to figures 2 and 3, embodiments of the apparatus 100 may include a plurality of sets 154 of electrical conductors 112a, 112b, 112c, wherein each set 154 of electrical conductors 112a, 112b, 112c includes the electrical conductors 112a, 112b, 112c illustrated in figures 2 and 3.

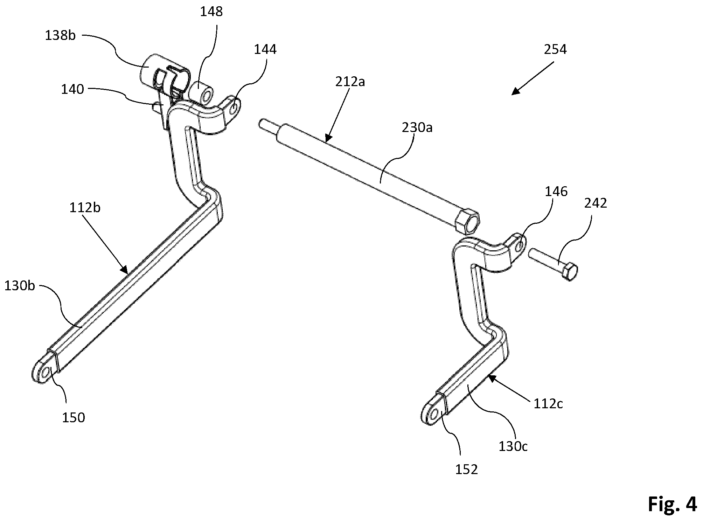

With reference to figure 4, other embodiments of the one or more electrical conductors 212a, 112b, 112c or another embodiment of the set 254 of electrical conductors 212a, 112b, 112c is/are schematically illustrated in an unassembled, or detached, state. In figure 4, the first electrically conductive member 230a differs from the first electrically conductive member 130a of figures 2 and 3 in that the first electrically conductive member 230a is provided with threads and is configured for threaded attachment to the nut 148 and to a modified shorter threaded attachment element 242 for the attachment to the second electrically conductive members 130b, 130c, for example via the openings 144, 146 of the second electrically conductive members 130b, 130c. In figure 4, also a second tubular member 138b is illustrated in a detached state. Otherwise, features of the one or more electrical conductors 212a, 112b, 112c of figure 4 may correspond to features of the one or more electrical conductors 112a, 112b, 112c of figures 2 and 3 and are thus not repeated here.

With reference to figures 2 to 4, the one or more electrical conductors 112a, 212a, 112b, 112c may be configured for high voltage, such as a voltage above 60 V, for example above 400 V, such as above 650 V. For example, the one or more electrical conductors 112a, 212a, 112b, 112c may be configured for a voltage up to 1500 V, or a voltage above 1500 V. The one or more electrical conductors 112a, 212a, 112b, 112c may be configured for direct current.

With reference to figures 1 to 17, for some embodiments, the one or more electrical conductors 112a, 112b, 112c is/are configured for the electrical interconnection of electric battery cell units 102a, 102b, 102c, 102d, 102e, 102f of the plurality of electric battery cell units 102a, 102b, 102c, 102d, 102e, 102f which belong to different electric battery layers 106a, 106b, 106c, 106d. For some embodiments, the two or more electrical conductors 112a, 112b, 112c may be configured for the electrical interconnection of electric battery cell units 102a, 102b, 102c, 102d, 102e, 102f of the plurality of electric battery cell units 102a, 102b, 102c, 102d, 102e, 102f which belong to different electric battery layers 106a, 106b, 106c, 106d.

With reference to figures 1 to 17, for some embodiments, the first electrically conductive member 130a may be configured for the electrical interconnection of electric battery cell units 102a, 102b, 102c, 102d, 102e, 102f of the plurality of electric battery cell units 102a, 102b, 102c, 102d, 102e, 102f which belong to different electric battery layers 106a, 106b, 106c, 106d while the one or more second electrically conductive members 130b, 130c may be configured to electrically connect one electric battery cell unit 102a, 102b, 102c, 102d, 102e, 102f of the plurality of electric battery cell units 102a, 102b, 102c, 102d, 102e, 102f to the first electrically conductive member 130a.

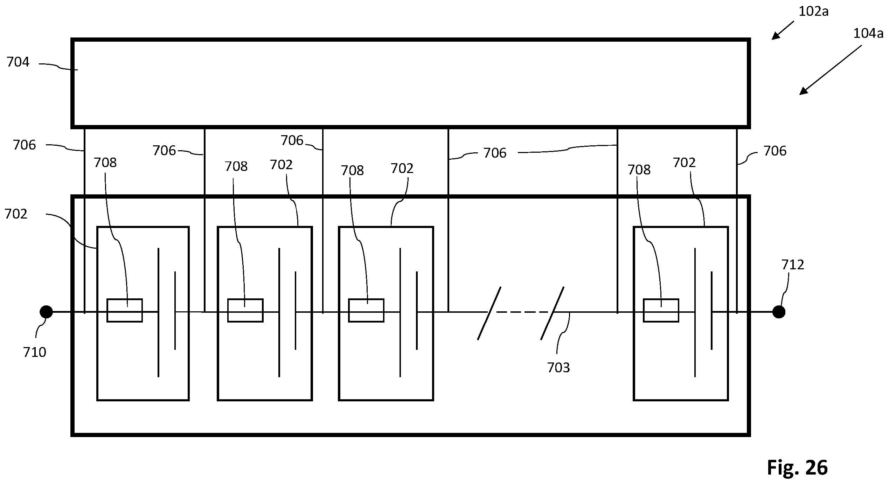

With reference to figures 1 to 17, for some embodiments, the one or more electrical conductors 112a, 112b, 112c may be configured for the electrical interconnection of electric battery cell units 102a, 102b, 102c, 102d, 102e, 102f, wherein each one 102a, 102b, 102d, 102c, 102e, 102f of the electric battery cell units 102a, 102b, 102c, 102d, 102e, 102f includes a plurality of electric battery cells 702 (see figure 26).

With reference to figures 5 to 17, the process of connecting the plurality of electric battery cell units 102a, 102b, 102c, 102d, 102e, 102f, including steps of the electrical interconnection of the plurality of electric battery cell units 102a, 102b, 102c, 102d, 102e, 102f and steps of the mechanical connection, or mounting, of the plurality of electric battery cell units 102a, 102b, 102c, 102d, 102e, 102f by way of embodiments of the apparatus 100, will hereinbelow be described in more detail.

With reference to figure 5, the inside and the room 110c of a housing unit 108c is partially illustrated. No electrical conductor and no electric battery cell unit are yet positioned or placed in the seat 122c or in the room 110c. However, a second tubular member 138b has been placed and positioned in the seat 122c.

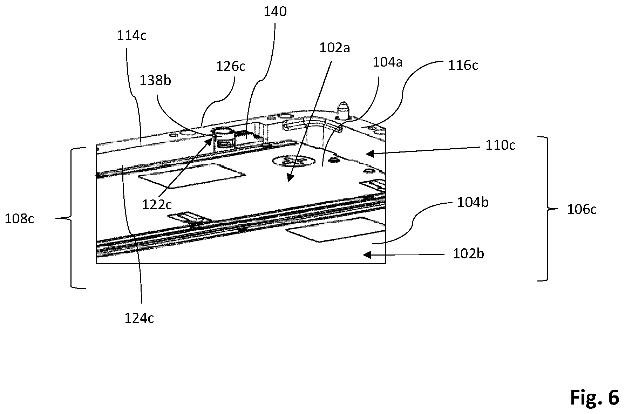

With reference to figure 6, an electric battery layer 106c including three electric battery modules 104a, 104b, 104c (only two 104a, 104b of the three electric battery modules 104a, 104b, 104c are visible in figure 6) has been placed in the room 110c of the housing unit 108c, i.e. three electric battery modules 104a, 104b, 104c are now housed by the room 110c of the housing unit 108c.

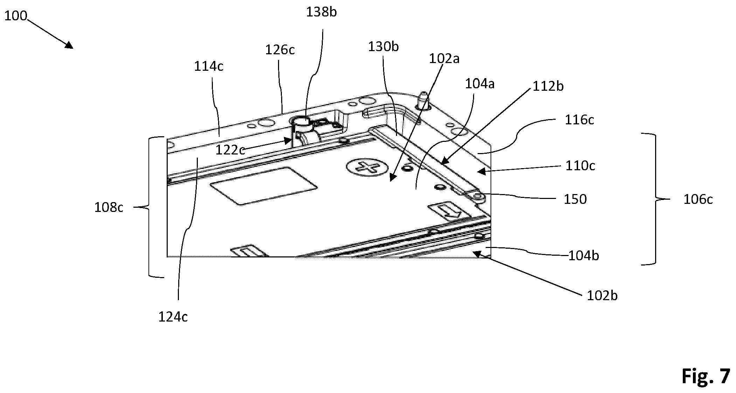

With reference to figure 7, a second electrically conductive member 130b has been placed in the room 110c of the housing unit 108c and has been connected to the second tubular member 138b. The second electrically conductive member 130b has also been electrically connected to an electric battery cell unit 102a, for example to an electric battery module 104a, via the electrical contact 150 and/or the attachment 150 of the second electrically conductive member 130b, for example electrically connected to the terminal, or the pole, of the electric battery cell unit 102a, for example to the terminal, or the pole, of the electric battery module 104a.

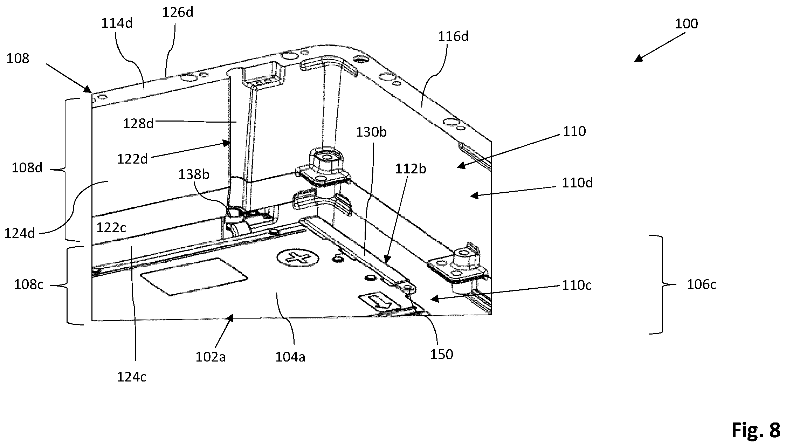

With reference to figure 8, an additional housing unit 108d has been added and mounted to the previous housing unit 108c, on top of the previous housing unit 108c. The additional housing unit 108d forms a room 110d in a corresponding way as the previous housing unit 108c, wherein a wall 114d of the housing unit 108d has a seat 122d.

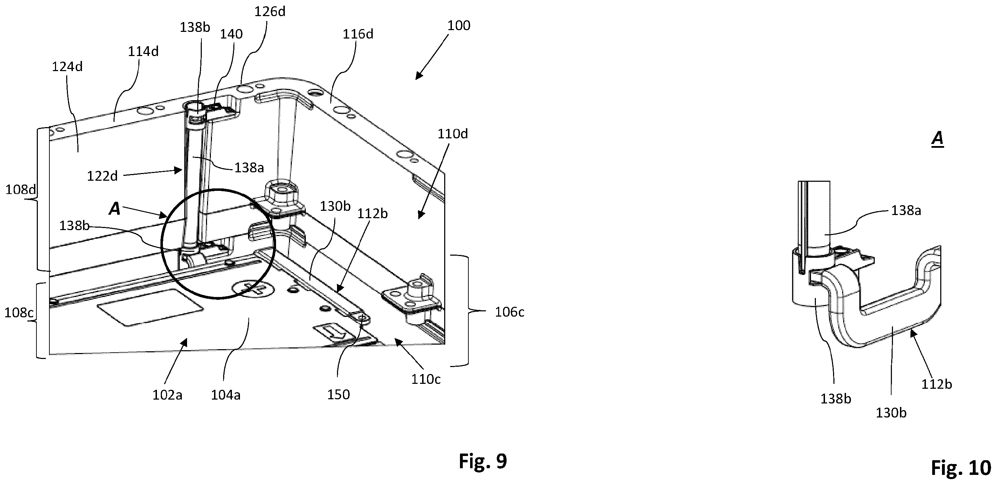

With reference to figure 8, a first tubular member 138a of the one or more tubular members 138a, 138b and an additional second tubular member 138b of the one or more tubular members 138a, 138b have been placed in the seat 122d. With reference to figure 9, an enlargement of the region A of figure 9 is shown, wherein the connection of the second electrically conductive member 130b to the second tubular member 138b is shown in more detail.

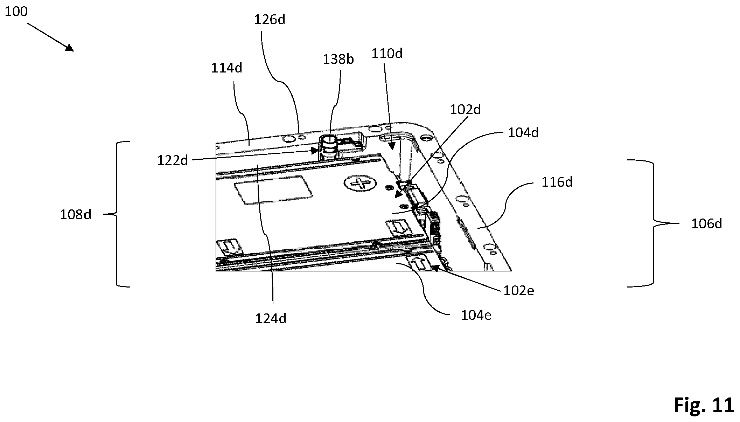

With reference to figure 11, an electric battery layer 106d including three electric battery modules 104d, 104e, 104f (only two 104d, 104e of the three electric battery modules 104d, 104e, 104f are visible in figure 11 while all three electric battery modules 104d, 104e, 104f are shown in figure 1) has been placed in the room 110d of the housing unit 108d, i.e. three electric battery modules 104d, 104e, 104f are now housed by the room 110d of the housing unit 108d.

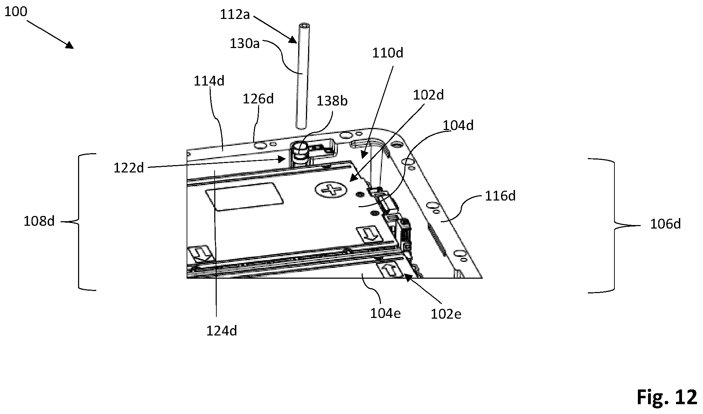

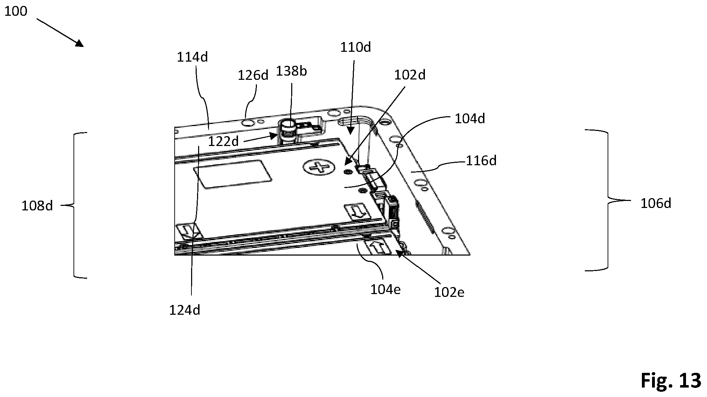

With reference to figure 12, the provision of the first electrically conductive member 130a is illustrated, but the first electrically conductive member 130a is not yet put in place for electrical connection. With reference to figure 13, the first electrically conductive member 130a, which may be referred to as an electrical conductor 112a, has now been inserted into the first tubular member 138a and is now held by the seat 122d.

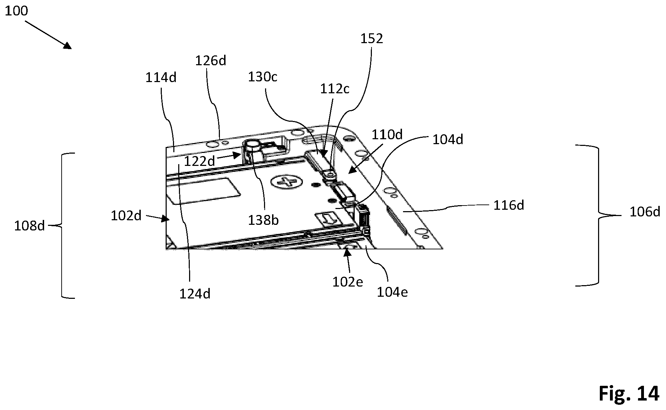

With reference to figure 14, an additional second electrically conductive member 130c has been placed in the room 110d of the housing unit 108d and has been connected to the second tubular member 138b. The second electrically conductive member 130c has also been electrically connected to an electric battery cell unit 102d, for example to an electric battery module 104d, via the electrical contact 152 and/or the attachment 152 of the second electrically conductive member 130c, for example electrically connected to the terminal, or the pole, of the electric battery cell unit 102d, for example to the terminal, or the pole, of the electric battery module 104d.

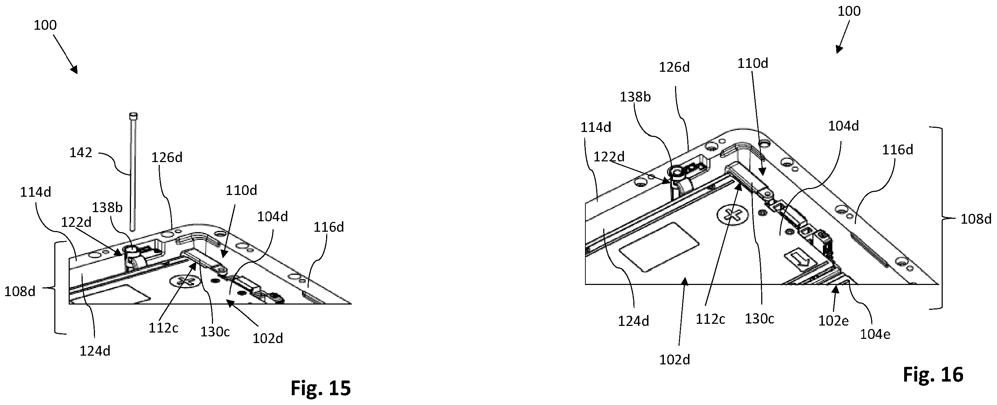

With reference to figure 15, the provision of the threaded attachment element 142 is illustrated. With reference to figure 16, the threaded attachment element 142 has been inserted into the tubular and hollow first electrically conductive member 130a and has engaged the nut 148 (not shown in figures 15 and 16). Herewith, a robust mechanical connection and a robust electrical connection between the first electrically conductive member 130a and the two second electrically conductive members 130b, 130c have been provided.

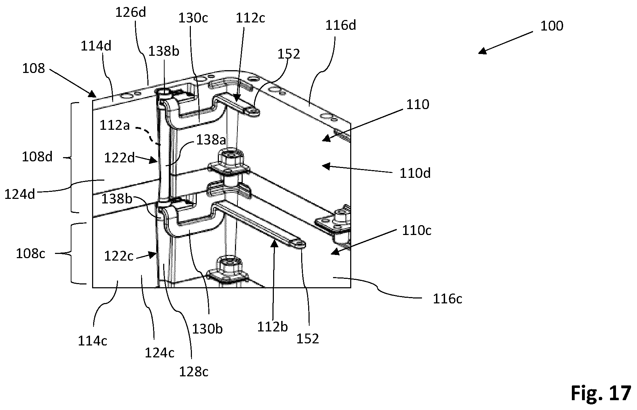

With reference to figure 17, the plurality of electric battery cell units 102a, 102b, 102c, 102d, 102e, 102f, such as the plurality of electric battery modules 104a, 104b, 104c, 104d, 104e, 104f, has been removed in relation to figures 15 and 16 for illustrative purposes. Herewith, the mechanical connection and the electrical connection between the first electrically conductive member 130a and the two second electrically conductive members 130b, 130c are now illustrated in further detail.

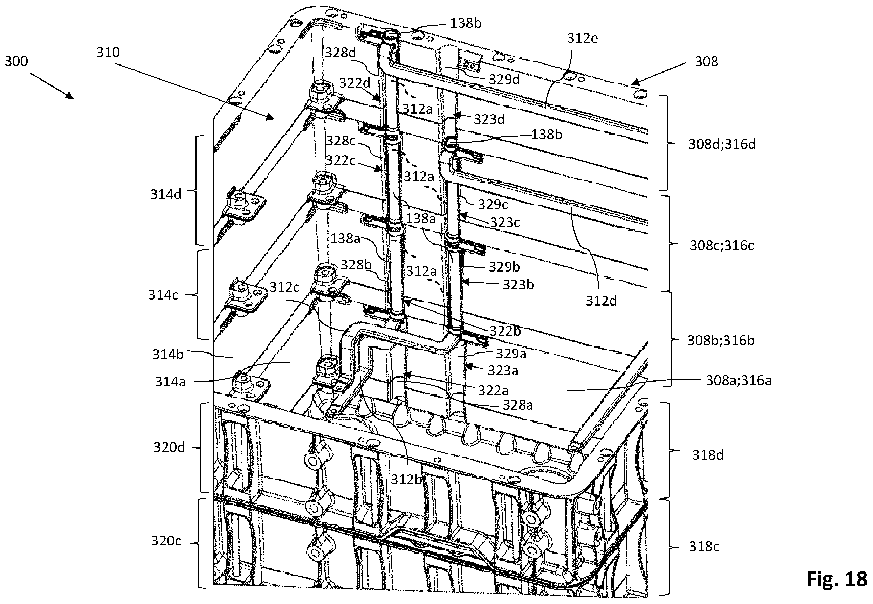

With reference to figure 18, a second embodiment of the apparatus 300 according to the first aspect and the inside and the room 310 of the housing 308 are partially and schematically illustrated, but with the plurality of electric battery cell units removed for illustrative purposes. Walls 314a-d, 316a-d, 318c-d, 320c-d of the housing 308 form seats 322a-d, 323a-d for holding the electrical conductors 312a, 312b, 312c, 312d, 312e, wherein each one 312a of the electrical conductors 312a having a longitudinal extension extending in a vertical direction in figure 18 is surrounded by a tubular member 138a. The housing 308 may be built up by housing units 308a-d. In the embodiment illustrated in figure 18, each one 322a-d, 323a-d of the seats 322a-d, 323a-d comprises, or forms, a compartment 328a-d, 329a-d. Otherwise, other features of the apparatus 300 of figure 18 may correspond to features of the apparatus 100 of figures 1 to 17 and are thus not described here in further detail again to avoid repetition.

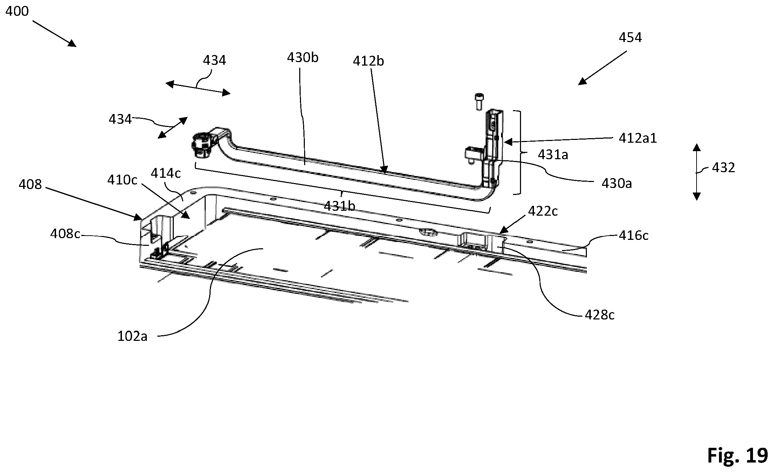

With reference to figures 19 to 22, a third embodiment of the apparatus 400 according to the first aspect of the invention is schematically illustrated. In figure 19, only a part of a housing unit 408c of the housing 408 of the apparatus 400 is shown. The room 410c formed by the housing unit 408c houses a plurality of electric battery cell units 102a, 102b, 102c. In figure 19, the provision of electrical conductors 412a1, 412b is schematically illustrated. The electrical conductors 412a1, 412b of figures 19 to 22 comprise a first electrically conductive member 430a configured to be held by the seat 422c formed, or included, in one or more walls 416c of the walls 414c, 416c, 418c, 420c of the housing 408, or of housing unit 408c. The seat 422c may form a compartment 428c. The electrical conductors 412a1, 412b comprise a second electrically conductive member 430b, which may comprise or consist of a busbar. In the embodiment illustrated in figure 19, a longitudinal extension 431a of the first electrically conductive member 430a extends in a first direction 432 while a longitudinal extension 431b of the second electrically conductive member 430b extends in one or more second directions 434, 436 transverse to the first direction 432.

With reference to figure 20, the one or more electrical conductors 412a1, 412b is/are now put in place in the seat 422c. Further, an additional set of 454 of electrical conductors 412a2, 412b is put in place in an additional seat 423c, which also forms a compartment 429c, opposite to the seat 422c for the set of 454 of electrical conductors 412a1, 412b illustrated in figure 19.

With reference to figure 21, the provision of an additional housing unit 408d of the housing 408 is schematically illustrated, wherein the room formed by the additional housing unit 408d (which is illustrated in a partly transparent state) houses a plurality of electric battery cell units 102d, 102e, 102f, and wherein one or more walls 420d of the walls 414d, 416d, 418d, 420d of the additional housing unit 408d forms/form one or more seats 423d. It is to be understood that the apparatus 400 may comprise one or more further additional housing units. It is to be understood that the apparatus 400 may comprise one or more further additional sets of 454 of electrical conductors 412a2, 412a3, 412b. For example, one or more further additional sets of 454 of electrical conductors 412a2, 412a3, 412b may be added with each further additional housing unit.

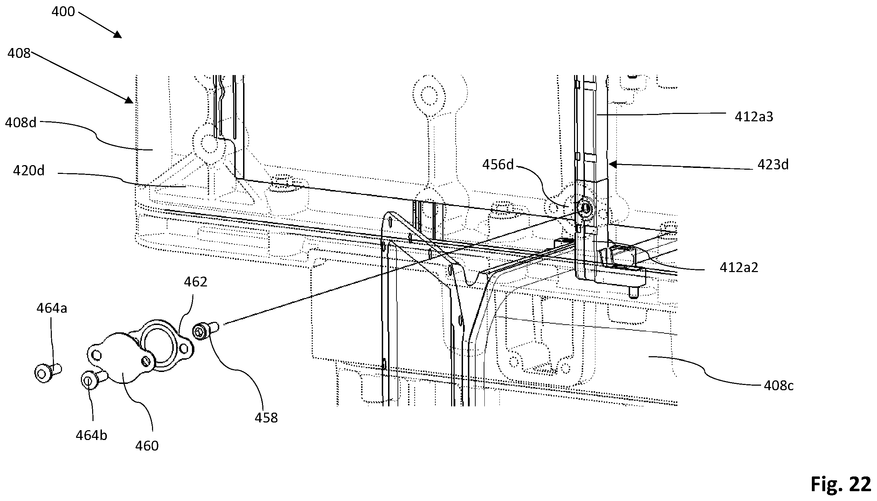

With reference to figures 21 and 22, for some embodiments, one or more walls 420d of the one or more of the walls 414c-d, 416c-d, 418c-d, 420c-d of the housing 408 (which is illustrated in a partly transparent state), or of the housing unit 408c-d, may form an opening 456d for receiving an attachment member 458, or a fastener, configured to attach two or more electrical conductors 412a2, 412a3 to one another. For some embodiments, it may be defined that each one 408c-d of the two or more housing units 408c-d forms an opening 456d for receiving the attachment member 458 configured to attach two or more electrical conductors 412a2, 412a3 to one another. For some embodiments, it may be defined that that the attachment member 458 is configured to secure physical contact between two or more electrical conductors 412a2, 412a3. For some embodiments, the apparatus 400 may comprise a cover 460 for covering the opening 456d. For some embodiments, the apparatus 400 may comprise a sealing 462 for sealing the opening 456d, for example for sealing between the cover 460 and the wall 420d of the housing 408, or of housing unit 408d. The sealing 462 may be annular, for example an annular seal. For some embodiments, the apparatus 400 may comprise cover attachments 464a-b for attaching the cover 460 to the housing 408, or to the housing unit 408d, and additionally and optionally for mounting the sealing 462. One or more of the cover attachments 464a-b and the attachment member 458 may include one or more thread attachments, or any other means of attachments, or attachments, for example any one of the sorts of attachment mentioned above. Otherwise, other features of the apparatus 400 of figures 19 to 22 may correspond to features of the apparatus 100 of figures 1 to 17 and are thus not described here in further detail again to avoid repetition.

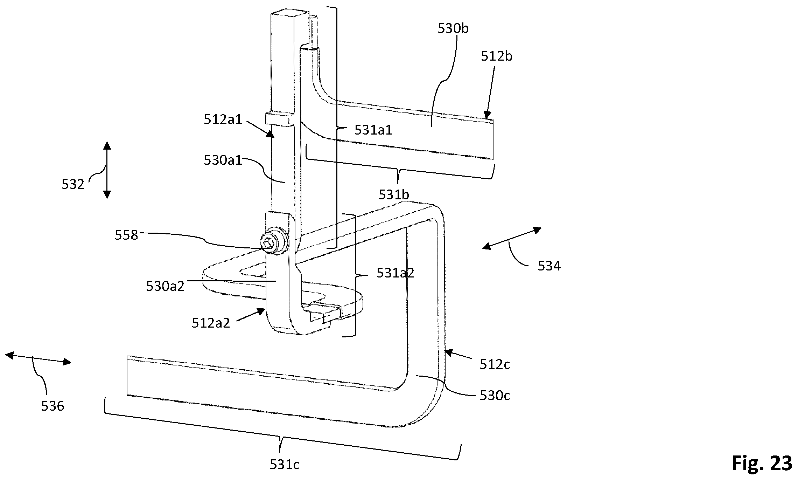

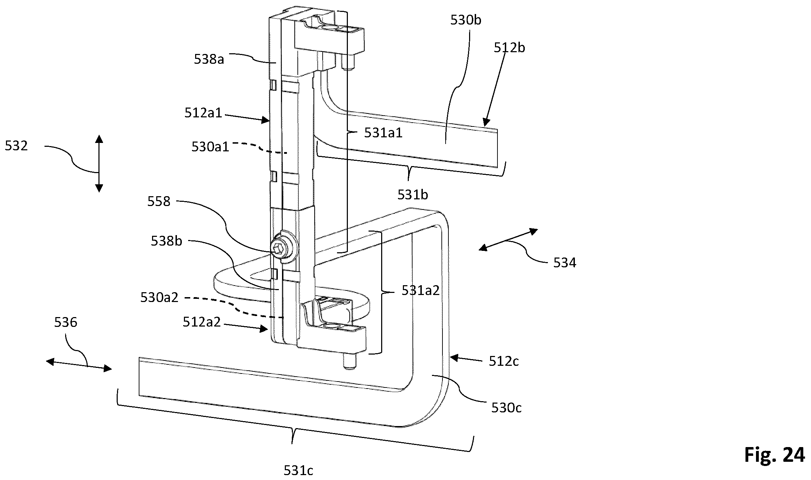

With reference to figures 23 and 24, embodiments of electrical conductors 512a1, 512a2, 512b, 512c of an embodiment of the apparatus according the first aspect of the invention are schematically illustrated. The electrical conductors 512a1, 512a2, 512b, 512c of figures 23 and 24 comprise two first electrically conductive members 530a1, 530a2 configured to be held by one or more seats formed, or included, in one or more walls of the walls of the housing, housing unit, or housing units. The electrical conductors 512a1, 512a2, 512b, 512c comprise two second electrically conductive member 530b, 530c which may comprise or consist of a busbar. In the embodiment illustrated in figures 23 and 24, longitudinal extensions 531a1, 531a2 of the first electrically conductive members 530a1, 530a2 extend in a first direction 532 while longitudinal extensions 531b, 531c of the second electrically conductive members 530b, 530c extend in one or more second directions 534, 536 transverse to the first direction 532. In the embodiment illustrated in figures 22 and 23, the first electrically conductive members 530a1, 530a2 are attached and coupled to one another by way of an attachment member 558. In figure 24, electrical conductors 512a1, 512a2 of figure 23 are provided with tubular members 538a, 538b at least partially made, or entirely made, of an electrically insulating material. The electrically insulating material may comprise or consist of a polymer or a polymer composite. However, other electrically insulating materials are possible. When the apparatus includes the tubular members 538a, 538b, the tubular member 538a, 538b at least partially surrounds the electrical conductor 512a1, 512a2. In the embodiment illustrated in figure 24, each one 530a1, 530a2 the first electrically conductive members 530a1, 530a2 is at least partially surrounded by the tubular member 538a, 538b.

With reference to figures 1 to 24, it is to be understood that the design of the one or more electrical conductors 112a, 212a, 112b, 112c, 312b, 312c, 312d, 312e, 412a1, 412a2, 412a3, 412b, 512a1, 512a2, 512b, 512c of the apparatus 100, 300, 400 and/or the number of electrical conductors, or the number of sets of electrical conductors 112a, 212a, 112b, 112c, 312b, 312c, 312d, 312e, 412a1, 412a2, 412a3, 412b, may be different from what is illustrated in figures 1 to 24. For example, for some embodiments, the apparatus 100, 300, 400 may include additional electrical conductors 112a, 212a, 112b, 112c, 312b, 312c, 312d, 312e, 412a1, 412a2, 412a3, 412b, 512a1, 512a2, 512b, 512c for the electrical interconnection of a plurality of electric battery cell units 102a, 102b, 102c, 102d, 102e, 102f.

Figures 25A and 25B schematically illustrate two circuit diagrams illustrating an assembled and electrically interconnected embodiment of the apparatus 100, 300, 400. With reference to figure 25A, four electric battery layers 106a, 106b, 106c, 106d are illustrated, which may correspond to the electric battery layers 106a, 106b, 106c, 106d illustrated in figure 1. Each one 106a, 106d of the third electric battery layer 106c and the fourth electric battery layer 106d from below includes three electric battery modules 104a, 104b, 104c, 104d, 104e, 104f. Each one 106a, 106b of the first electric battery layer 106a and the second electric battery layer 106b from below includes two electric battery modules 104g, 104h, 104i, 104j. However, it is to be understood that each one 106a, 106b, 106c, 106d of the electric battery layers 106a, 106b, 106c, 106d may include fewer or more electric battery modules.

With reference to figure 25A, for the shown embodiment, the first electric battery layer 106a from below comprises an electric battery junction device 602, or box. However, for alternative embodiments, the electric battery junction device 602 may be connected and located elsewhere or may even be excluded. In figure 25A, plus (+) and minus (-) indicate the terminals, or poles, of the electric battery modules 104a, 104b, 104c, 104d, 104e, 104f, 104g, 104h, 104i, 104j, and the lines therebetween indicate electrical lines, or electrical connections, provided by the one or more electrical conductors 112a, 112b, 112c of the apparatus 100 for the electrical connection of one electric battery modules 104a, 104b, 104c, 104d, 104e, 104f, 104g, 104h, 104i, 104j of the plurality of electric battery modules 104a, 104b, 104c, 104d, 104e, 104f, 104g, 104h, 104i, 104j to another electric battery modules 104a, 104b, 104c, 104d, 104e, 104f, 104g, 104h, 104i, 104j of the plurality of electric battery modules 104a, 104b, 104c, 104d, 104e, 104f, 104g, 104h, 104i, 104j. As illustrated in the shown embodiment, some of the electric battery modules 104a, 104b, 104c, 104d, 104e, 104f, 104g, 104h, 104i, 104j are interconnected via the electric battery junction device 602.

With reference to figure 25A, the interlayer connection of the electric battery modules 104a, 104b, 104c, 104d, 104e, 104f, 104g, 104h, 104i, 104j, i.e. the electrical interconnection between electric battery modules 104a, 104b, 104c, 104d, 104e, 104f, 104g, 104h, 104i, 104j of different electric battery layers 106a, 106b, 106c, 106d, is illustrated by nodes, or points, provided with letters *A, B, E, F, N* and *P,* which are also indicated in figure 25B, wherein said interlayer connection is clearly illustrated in figure 25B. It may be described that embodiments of the apparatus 100, 300, 400 according to first aspects provide for a modular concept for the electrical interconnection of a plurality of electric battery cell units 102a, 102b, 102c, 102d, 102e, 102f, for example for the electrical interconnection of a plurality of electric battery modules 104a, 104b, 104c, 104d, 104e, 104f, 104g, 104h, 104i, 104j. For example, the number of electric battery modules 104a, 104b, 104c, 104d, 104e, 104f, 104g, 104h, 104i, 104j and the number of electric battery layers 106a, 106b, 106c, 106d may be adapted to the overall electric power requested and/or to the physical environment where the apparatus 100 is to be installed. The modular concept in this context is to be understood as using a plurality of electric battery modules 104a, 104b, 104c, 104d, 104e, 104f, 104g, 104h, 104i, 104j and a plurality of electric battery layers 106a, 106b, 106c, 106d including one or more electric battery modules 104a, 104b, 104c, 104d, 104e, 104f, 104g, 104h, 104i, 104j for flexibility, wherein electric battery modules 104a, 104b, 104c, 104d, 104e, 104f, 104g, 104h, 104i, 104j and electric battery layers 106a, 106b, 106c, 106d may be added and connected, or removed, when required.

With reference to figure 26, an example of an electric battery cell unit 102a, 102b,102c, 102d, 102e, 102f, such as an electric battery module 104a, 104b, 104c, 104d, 104e, 104f, is schematically illustrated in the form of a schematic circuit diagram, wherein the electric battery cell unit 102a, or the electric battery module 104a, includes a plurality of electric battery cells 702, i.e. two or more electric battery cells 702. The illustrated electric battery cell unit 102a may be carried by, or included in, a vehicle 900 and/or included in a powertrain 904 of the vehicle 900 (see figure 28).

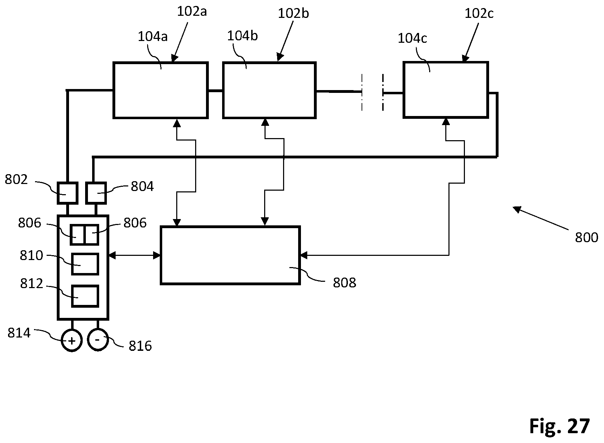

With reference to figure 26, each electric battery cell 702 can be seen as a container chemically storing energy and may be a rechargeable electric battery cell 702. The electric battery cells 702 may be electrically connected in series and/or in parallel, into the electric battery cell unit 102a, or into the electric battery module 104a, which may be included in an electric battery pack 800 (see figure 27), in order to attain the desired voltage and energy capacity. In the shown example, the electric battery cells 702 are electrically connected in series with one another. In shown example, the electric battery cells 702 are part of a main power line 703. However, in other examples, the main power line 703 may be excluded and the electric battery cells 702 may be electrically interconnected in other ways.

With reference to figure 26, the electric battery cell unit 102a, or the electric battery module 104a, may include a cell controller 704 which may be electrically connected in parallel with each electric battery cell 702 by way of a plurality of electrical lines 706, for example electrical wires. The cell controller 704 may be called a cell module controller (CMC). The electric battery cell 702 may include a cell fuse 708, for example, for short-circuit and/over voltage protection. However, for some embodiments, the cell fuse 708 may be excluded.

With reference to figure 26, the electric battery cell unit 102a, or the electric battery module 104a, may have two terminals 710, 712 for connecting the electric battery cell unit 102a, or the electric battery module 104a, to an electrical system, for example to one or more electrical loads, for example via a vehicle electrical system 950 (see figure 28) and/or via electrical conductors. The two terminals 710, 712 may be referred to as electrical contacts. One 710, 712 of the two terminals 710, 712 may be a negative terminal having a negative pole while the other one 710, 712 of the two terminals 710, 712 may be a positive terminal having a positive pole. With reference to figure 26, the electric battery cell unit 102a, or the electric battery module 104a, may be configured for the propulsion of a vehicle 900 (see figure 28).

One or more electric battery cell units 102a, 102b, 102c, or one or more electric battery modules 104a, 104b, 104c, may be included in, or form, an electric battery pack 800 schematically illustrated in figure 27, for example suitable for a vehicle 900 (see figure 28). It may be defined that the electric battery pack 800 is configured for the propulsion of a vehicle 900 (see figure 28). With reference to figure 27, the electric battery pack 800 may comprise two or more electric battery cell units 102a, 102b, 102c, or two or more electric battery modules 104a, 104b, 104c which may be electrically connected in series and have two common outputs 802, 804 (positive and negative) for electric power, or current, transfer. The electric battery pack 800 may have two terminals 814, 816 (DC positive and DC negative) for electric power, or current, transfer, to be connected to one or more electrical loads, for example via a vehicle electrical system 950 (see figure 28) and/or via electrical conductors. The above-mentioned two common outputs 802, 804 may be connected to the two terminals 814, 816 of the electric battery pack 800.

With reference to figure 27, the electric battery pack 800 may comprise one or more internal contactors 806 switchable between an open position, or a non-conducting state, and a closed position, or a conducting state. The electric battery pack 400 may include a battery management system 808, BMS. The battery management system 808, BMS, may be described as a control system for controlling the electric battery pack 800. The one or more internal contactors 806 of the electric battery pack 800 may be controlled by the battery management system 808. The battery management system 808 may be connected to and communicate with the above-mentioned cell module controller, CMC, 704 of the electric battery cell unit 102a, 102b, 102c, or the electric battery module 104a, 104b, 104c, illustrated in figure 26.

With reference to figure 27, the electric battery pack 800 may include a pre-charge contactor 810 switchable between an open position, or a non-conducting state, and a closed position, or a conducting state. In general, when the battery management system 808 is activated or active, a pre-charging of an electrical system (such as a vehicle electrical system) to which the electric battery pack 800 is connected may be performed before all the internal contactors 806 are closed, for example with the aid of the pre-charge contactor 810. Pre-charging of a high voltage direct current system is known to the person skilled in the art and is thus not discussed in further detail.

With reference to figure 27, the electric battery pack 800 may comprises an electric battery pack fuse 812, which, for example, may be a melt fuse, or a pyrotechnic fuse (or pyro fuse), for protection. It is to be understood that the electric battery pack 800 may include additional electrical components or equipment, such as sensors, but these are left out for illustrative purposes.

With reference to figure 28, an embodiment of the vehicle 900 according to the third aspect of the invention is schematically illustrated. The vehicle 900 includes one or more of the group of: an apparatus 100, 300, 400 according to any one of the embodiments disclosed above or below; and an embodiment of the vehicle electrical system 950 according to the second aspect of the invention described hereinbelow.

With reference to figure 28, the vehicle 900 is illustrated as a tractor vehicle. However, for other embodiments, the vehicle 900 may, for example, be a bus, a truck, a heavy truck, or a car. Other types of vehicles are also possible. The vehicle 900 may be an electric vehicle, EV, for example a hybrid vehicle or a hybrid electric vehicle, HEV, or a battery electric vehicle, BEV.

With reference to figure 28, the vehicle 900 may be a wheeled vehicle, i.e. a vehicle 900 having wheels 902. Only the wheels 902 on the left-hand side of the vehicle 900 are visible in figure 28. It is to be understood that the vehicle 900 may have fewer or more wheels than what is shown in figure 28. The vehicle 900 may comprise a powertrain 904, for example configured for one of an EV, HEV and BEV. The vehicle 900 may be configured to hold or carry, or may include, a plurality of electric battery cell units 102a, 102b, 102c, 102d, 102e, 102f, for example of any one of the sorts mentioned above. The room 110 of the housing 108 of any one of the embodiments of apparatus 100, 300, 400 may house the plurality of electric battery cell units 102a, 102b, 102c, 102d, 102e, 102f. The plurality of electric battery cell units 102a, 102b, 102c, 102d, 102e, 102f may be configured for the propulsion of the vehicle 900. The housing 108 of the apparatus 100 may be attachable to a chassis 908 of the vehicle 900. It is to be understood that the vehicle 900 may include further units, components, such as electrical and/or mechanical components, one or more electric machines 910, a combustion engine 912 and other devices required for a vehicle 900, such as for an EV, HEV or BEV.

With reference to figure 28, it may be defined that the powertrain 904 and/or the one or more electric machines 910 is/are configured to propel, or drive, the vehicle 900. It may be defined that the powertrain 904 includes the plurality of electric battery cell units 102a, 102b, 102c, 102d, 102e, 102f.

With reference to figure 28, also an embodiment of the vehicle electrical system 950 according to the second aspect of the invention is schematically illustrated. The vehicle electrical system 950 includes an apparatus 100, 300, 400 according to any one of the embodiments disclosed above. For some embodiments, the vehicle electrical system 950 may be a vehicle high voltage system. For some embodiments, the vehicle electrical system 950 includes the plurality of electric battery cell units 102a, 102b, 102c, 102d, 102e, 102f.

With reference to figure 28, it may be defined that the vehicle electrical system 950 is configured for direct current. It may be described that the vehicle electrical system 950 is configured to transfer direct current. It may be defined that the vehicle electrical system 950 is configured for a high voltage, such as a voltage above 60 V, for example above 400 V, or above 450 V, such as above 650 V. For example, the vehicle electrical system 950 may be configured for a voltage up to 1500 V and/or for a voltage above 1500 V. The electric power, or the electric current, for example the direct current, of the vehicle electrical system 950 may be transferred at a high voltage, for example at one or more of the voltages levels mentioned above. The vehicle electrical system 950 may be configured to transfer the electric power, or the electric current, at a high voltage, for example at one or more of the voltages levels mentioned above.

With reference to Figure 28, the vehicle electrical system 950 may be electrically connected, or connectable, to the plurality of electric battery cell units 102a, 102b, 102c, 102d, 102e, 102f. The vehicle electrical system 950 may be configured to electrically connect the plurality of electric battery cell units 102a, 102b, 102c, 102d, 102e, 102f to the powertrain 904 of the vehicle 900. The vehicle electrical system 950 may be configured to electrically connect the plurality of electric battery cell units 102a, 102b, 102c, 102d, 102e, 102f to the one or more electric machines 910 of the vehicle 900. It may be defined that the vehicle electrical system 950 is configured to transfer the electric power, or the electric current, for example between the one or more electric machines 910 (and/or the powertrain 904) and the plurality of electric battery cell units 102a, 102b, 102c, 102d, 102e, 102f.

It is to be understood that other applications of the embodiments according to the above-mentioned aspects of the invention, in addition to an application to a vehicle 900 and any other application mentioned above, are possible.

The present invention is not limited to the above-described embodiments. Instead, the present invention relates to, and encompasses all different embodiments being included within the scope of the independent claim.

## Claims

1. An apparatus (100; 300; 400) for the electrical interconnection of a plurality of electric battery cell units (102a, 102b, 102c, 102d, 102e, 102f), wherein the apparatus (100) comprises
a housing (108) comprises two or more housing units (108a-d),
wherein each one (108a-d) of the two or more housing units (108a-d) forms at least one room (110c, 110d) for housing a plurality of electric battery cell units (102a, 102b, 102c, 102d, 102e, 102f), and
one or more electrical conductors (112a, 112b, 112c) for the electrical connection of one electric battery cell unit (102a, 102b, 102c, 102d, 102e, 102f) of the plurality of electric battery cell units (102a, 102b, 102c, 102d, 102e, 102f) to another electric battery cell unit (102a, 102b, 102c, 102d, 102e, 102f) of the plurality of electric battery cell units (102a, 102b, 102c, 102d, 102e, 102f),
wherein each one of the two or more housing units (108a-d) comprises one or more walls (114a-d, 116a-d, 118a-d, 120a-d),
wherein the at least one room (100c, 110c) of the housing unit (108a-d) is defined by the one or more walls (114a-d, 116a-d, 118a-d, 120a-d) of the housing unit (108a-d), wherein the wall (114a-d, 116a-d, 118a-d, 120a-d) of each one of the two or more housing units (108a-d) comprises one or more seats (122c, 122d) for holding the electrical conductor (112a, 112b, 112c), wherein the seat (122c, 122d) forms a compartment (128c, 128d) for holding the electrical conductor (112a, 112b, 112c).

2. An apparatus (100; 300; 400) according to claim 1, wherein the wall (114a-d, 116a-d, 118a-d, 120a-d) has an inner side (124c, 124d) facing the room (110),
wherein the wall (114a-d, 116a-d, 118a-d, 120a-d) has an outer side (126c, 126d) facing away from the room (110), and
wherein the inner side (124c, 124d) of the wall (114a-d, 116a-d, 118a-d, 120a-d) comprises the one or more seats (122c, 122d).

3. An apparatus (100; 300; 400) according to claim 1 or 2, wherein the electrical conductor (112a, 112b, 112c) is configured for the electrical interconnection of electric battery cell units (102a, 102b, 102c, 102d, 102e, 102f) of the plurality of electric battery cell units (102a, 102b, 102c, 102d, 102e, 102f) which belong to different electric battery layers (106a, 106b, 106c, 106d).

4. An apparatus (100; 300; 400) according to claim 3, wherein the apparatus (100) comprises two or more electrical conductors (112a, 112b, 112c) electrically connectable to one another, and
wherein the two or more electrical conductors (112a, 112b, 112c) are configured for the electrical interconnection of electric battery cell units (102a, 102b, 102c, 102d, 102e, 102f) of the plurality of electric battery cell units (102a, 102b, 102c, 102d, 102e, 102f) which belong to different electric battery layers (106a, 106b, 106c, 106d).

5. An apparatus (100; 300; 400) according to claim 4, wherein the two or more electrical conductors (112a, 112b, 112c) are attachable to one another.

6. An apparatus (100; 300; 400) according to claim 4 or 5, wherein the two or more electrical conductors (112a, 112b, 112c) are configured for adjoining one another.

7. An apparatus (100; 300; 400) according to any one of the claims 4 to 6, wherein the wall (414a-d, 416a-d, 418a-d, 420a-d) forms an opening (456d) for receiving an attachment member (458) configured to attach two or more electrical conductors (112a, 112b, 112c) to one another.

8. An apparatus (100; 300; 400) according to any one of the claims 1-7, wherein the two or more housing units (108a-d) are attachable to one another.

9. An apparatus (100; 300; 400) according to any one of the claims 1-8, wherein each one of the two or more housing units (408c-d) forms an opening (456d) for receiving an attachment member (458) configured to attach two or more electrical conductors (112a, 112b, 112c) to one another.

10. An apparatus (100; 300; 400) according to any one of the claims 1 to 9, wherein the electrical conductor (112a, 112b, 112c) comprises a first electrically conductive member (130a) and one or more second electrically conductive members (130b, 130c),
wherein the first electrically conductive member (130a) is configured for the electrical interconnection of electric battery cell units (102a, 102b, 102c, 102d, 102e, 102f) of the plurality of electric battery cell units (102a, 102b, 102c, 102d, 102e, 102f) which belong to different electric battery layers (106a, 106b, 106c, 106d), and
wherein the one or more second electrically conductive members (130b, 130c) is/are configured to electrically connect one electric battery cell unit (102a, 102b, 102c, 102d, 102e, 102f) of the plurality of electric battery cell units (102a, 102b, 102c, 102d, 102e, 102f) to the first electrically conductive member (130a).

11. An apparatus (100; 300; 400) according to claim 10, wherein the first electrically conductive member (130a) has a longitudinal extension (131a),
wherein each one (130b, 130c) of the one or more second electrically conductive members (130b, 130c) has a longitudinal extension (131b, 131c),
wherein the longitudinal extension (131a) of the first electrically conductive member (130a) extends in a first direction (132), and
wherein the longitudinal extension (131b, 131c) of the one or more second electrically conductive members (130b, 130c) extends in one or more second directions (134, 136) transverse to the first direction (132).

12. An apparatus (100; 300; 400) according to any one of the claims 1 to 11, wherein the one or more electrical conductors (112a, 112b, 112c) is/are configured for the electrical interconnection of electric battery cell units (102a, 102b, 102c, 102d, 102e, 102f), each one (102a, 102b, 102c, 102d, 102e, 102f) of the electric battery cell units (102a, 102b, 102c, 102d, 102e, 102f) including a plurality of electric battery cells (702).

13. A vehicle electrical system (950) comprising one or more apparatuses (100; 300; 400) according to any one of the claims 1 to 12.

14. A vehicle electrical system (950) according to claim 13, wherein the vehicle electrical system (950) comprises the plurality of electric battery cell units (102a, 102b, 102c, 102d, 102e, 102f).

15. A vehicle (900) comprising one or more of the group of:
• an apparatus (100; 300; 400) according to any one of the claims 1 to 12; and
• a vehicle electrical system (950) according to claim 13 or 14.

## Patentansprüche

1. Vorrichtung (100; 300; 400) für die elektrische Verbindung einer Mehrzahl von elektrischen Batteriezelleneinheiten (102a, 102b, 102c, 102d, 102e, 102f), wobei die Vorrichtung (100) umfasst
ein Gehäuse (108) mit zwei oder mehr Gehäuseeinheiten (108a-d),
wobei jede (108a-d) der zwei oder mehr Gehäuseeinheiten (108a-d) mindestens einen Raum (110c, 110d) zur Unterbringung einer Mehrzahl von elektrischen Batteriezelleneinheiten (102a, 102b, 102c, 102d, 102e, 102f) bildet, und
einen oder mehrere elektrische Leiter (112a, 112b, 112c) für die elektrische Verbindung einer elektrischen Batteriezelleneinheit (102a, 102b, 102c, 102d, 102e, 102f) der Mehrzahl von elektrischen Batteriezelleneinheiten (102a, 102b, 102c, 102d, 102e, 102f) mit einer anderen elektrischen Batteriezelleneinheit (102a, 102b, 102c, 102d, 102e, 102f) der Mehrzahl von elektrischen Batteriezelleneinheiten (102a, 102b, 102c, 102d, 102e, 102f),
wobei jede der zwei oder mehr Gehäuseeinheiten (108a-d) eine oder mehrere Wände (114a-d, 116a-d, 118a-d, 120a-d) umfasst,
wobei der mindestens eine Raum (100c, 110c) der Gehäuseeinheit (108a-d) durch die eine oder mehreren Wände (114a-d, 116a-d, 118a-d, 120a-d) der Gehäuseeinheit (108a-d) definiert ist, wobei
die Wand (114a-d, 116a-d, 118a-d, 120a-d) jeder der zwei oder mehr Gehäuseeinheiten (108a-d) einen oder mehrere Sitze (122c, 122d) zum Halten des elektrischen Leiters (112a, 112b, 112c) umfasst, wobei der Sitz (122c, 122d) ein Fach (128c, 128d) zum Halten des elektrischen Leiters (112a, 112b, 112c) bildet.

2. Vorrichtung (100; 300; 400) nach Anspruch 1, wobei die Wand (114a-d, 116a-d, 118a-d, 120a-d) eine dem Raum (110) zugewandte Innenseite (124c, 124d) aufweist,
wobei die Wand (114a-d, 116a-d, 118a-d, 120a-d) eine dem Raum (110) abgewandte Außenseite (126c, 126d) aufweist, und
wobei die Innenseite (124c, 124d) der Wand (114a-d, 116a-d, 118a-d, 120a-d) den einen oder die mehreren Sitze (122c, 122d) aufweist.

3. Vorrichtung (100; 300; 400) nach Anspruch 1 oder 2, wobei der elektrische Leiter (112a, 112b, 112c) für die elektrische Verbindung von elektrischen Batteriezelleneinheiten (102a, 102b, 102c, 102d, 102e, 102f) der Mehrzahl von elektrischen Batteriezelleneinheiten (102a, 102b, 102c, 102d, 102e, 102f), die zu verschiedenen elektrischen Batterieschichten (106a, 106b, 106c, 106d) gehören, konfiguriert ist.

4. Vorrichtung (100; 300; 400) nach Anspruch 3, wobei die Vorrichtung (100) zwei oder mehr elektrische Leiter (112a, 112b, 112c) umfasst, die miteinander elektrisch verbunden werden können, und
wobei die zwei oder mehr elektrischen Leiter (112a, 112b, 112c) für die elektrische Verbindung von elektrischen Batteriezelleneinheiten (102a, 102b, 102c, 102d, 102e, 102f) der Mehrzahl von elektrischen Batteriezelleneinheiten (102a, 102b, 102c, 102d, 102e, 102f), die zu verschiedenen elektrischen Batterieschichten (106a, 106b, 106c, 106d) gehören, konfiguriert sind.

5. Vorrichtung (100; 300; 400) nach Anspruch 4, wobei die zwei oder mehr elektrischen Leiter (112a, 112b, 112c) aneinander befestigbar sind.

6. Vorrichtung (100; 300; 400) nach Anspruch 4 oder 5, wobei die zwei oder mehr elektrischen Leiter (112a, 112b, 112c) so konfiguriert sind, dass sie aneinander angrenzen.

7. Vorrichtung (100; 300; 400) nach einem der Ansprüche 4 bis 6, wobei die Wand (414a-d, 416a-d, 418a-d, 420a-d) eine Öffnung (456d) zur Aufnahme eines Befestigungselements (458) bildet, das so konfiguriert ist, dass es zwei oder mehr elektrische Leiter (112a, 112b, 112c) miteinander verbindet.

8. Vorrichtung (100; 300; 400) nach einem der Ansprüche 1-7, wobei die zwei oder mehr Gehäuseeinheiten (108a-d) aneinander befestigbar sind.

9. Vorrichtung (100; 300; 400) nach einem der Ansprüche 1-8, wobei jede der zwei oder mehr Gehäuseeinheiten (408c-d) eine Öffnung (456d) zur Aufnahme eines Befestigungselements (458) bildet, das so konfiguriert ist, dass es zwei oder mehr elektrische Leiter (112a, 112b, 112c) miteinander verbindet.

10. Vorrichtung (100; 300; 400) nach einem der Ansprüche 1 bis 9, wobei der elektrische Leiter (112a, 112b, 112c) ein erstes elektrisch leitendes Element (130a) und ein oder mehrere zweite elektrisch leitende Elemente (130b, 130c) umfasst,
wobei das erste elektrisch leitende Element (130a) zur elektrischen Verbindung von elektrischen Batteriezelleneinheiten (102a, 102b, 102c, 102d, 102e, 102f) der Mehrzahl von elektrischen Batteriezelleneinheiten (102a, 102b, 102c, 102d, 102e, 102f), die zu unterschiedlichen elektrischen Batterieschichten (106a, 106b, 106c, 106d) gehören, ausgebildet ist, und
wobei das eine oder die mehreren zweiten elektrisch leitenden Elemente (130b, 130c) so konfiguriert ist/sind, dass es/sie eine elektrische Batteriezelleneinheit (102a, 102b, 102c, 102d, 102e, 102f) der Mehrzahl von elektrischen Batteriezelleneinheiten (102a, 102b, 102c, 102d, 102e, 102f) mit dem ersten elektrisch leitenden Element (130a) elektrisch verbindet/verbinden.

11. Vorrichtung (100; 300; 400) nach Anspruch 10,
wobei das erste elektrisch leitende Element (130a) eine Längserstreckung (131a) aufweist,
wobei jedes (130b, 130c) der einen oder mehreren zweiten elektrisch leitenden Elemente (130b, 130c) eine Längserstreckung (131b, 131c) aufweist,
wobei die Längserstreckung (131a) des ersten elektrisch leitenden Elements (130a) sich in eine erste Richtung (132) erstreckt, und
wobei die Längserstreckung (131b, 131c) des einen oder der mehreren zweiten elektrisch leitenden Elemente (130b, 130c) sich in einer oder mehreren zweiten Richtungen (134, 136) quer zur ersten Richtung (132) erstreckt.

12. Vorrichtung (100; 300; 400) nach einem der Ansprüche 1 bis 11, wobei der eine oder die mehreren elektrischen Leiter (112a, 112b, 112c) für die elektrische Verbindung von elektrischen Batteriezelleneinheiten (102a, 102b, 102c, 102d, 102e, 102f) konfiguriert ist/sind, wobei jede (102a, 102b, 102c, 102d, 102e, 102f) der elektrischen Batteriezelleneinheiten (102a, 102b, 102c, 102d, 102e, 102f) eine Mehrzahl von elektrischen Batteriezellen (702) umfasst.

13. Fahrzeugbordnetz (950) mit einem oder mehreren Vorrichtungen (100; 300; 400) nach einem der Ansprüche 1 bis 12.

14. Fahrzeugbordnetz (950) nach Anspruch 13,
wobei das Fahrzeugbordnetz (950) die Mehrzahl von elektrischen Batteriezelleneinheiten (102a, 102b, 102c, 102d, 102e, 102f) umfasst.

15. Fahrzeug (900) mit einer oder mehreren der folgenden Gruppen:
• eine Vorrichtung (100; 300; 400) nach einem der Ansprüche 1 bis 12; und
• ein Fahrzeugbordnetz (950) nach Anspruch 13 oder 14.

## Revendications

1. Appareil (100 ; 300 ; 400) pour l'interconnexion électrique d'une pluralité d'unités d'éléments de batterie électrique (102a, 102b, 102c, 102d, 102e, 102f), dans lequel l'appareil (100) comprend
un logement (108) comprend deux unités de logement (108a-d) ou plus,
dans lequel chacune (108a-d) des deux unités de logement (108a-d) ou plus forme au moins une pièce (110c, 110d) pour loger une pluralité d'unités d'éléments de batterie électrique (102a, 102b, 102c, 102d, 102e, 102f), et
un ou plusieurs conducteurs électriques (112a, 112b, 112c) pour la connexion électrique d'une unité d'élément de batterie électrique (102a, 102b, 102c, 102d, 102e, 102f) de la pluralité d'unités d'éléments de batterie électrique (102a, 102b, 102c, 102d, 102e, 102f) à une autre unité d'élément de batterie électrique (102a, 102b, 102c, 102d, 102e, 102f) de la pluralité d'unités d'éléments de batterie électrique (102a, 102b, 102c, 102d, 102e, 102f),
dans lequel chacune des deux unités de logement (108a-d) ou plus comprend une ou plusieurs parois (114a-d, 116a-d, 118a-d, 120a-d),
dans lequel l'au moins une pièce (100c, 110c) de l'unité de logement (108a-d) est définie par les une ou plusieurs parois (114a-d, 116a-d, 118a-d, 120a-d) de l'unité de logement (108a-d),
dans lequel la paroi (114a-d, 116a-d, 118a-d, 120a-d) pour chacune des deux unités de logement (108a-d) ou plus comprend un ou plusieurs sièges (122c, 122d) pour maintenir le conducteur électrique (112a, 112b, 112c), dans lequel le siège (122c, 122d) forme un compartiment (128c, 128d) pour maintenir le compartiment électrique (112a, 112b, 112c).

2. Appareil (100 ; 300 ; 400) selon la revendication 1, dans lequel la paroi (114a-d, 116a-d, 118a-d, 120a-d) a un côté intérieur (124c, 124d) orienté face à la pièce (110),
dans lequel la paroi (114a-d, 116a-d, 118a-d, 120a-d) a un côté extérieur (126c, 126d) orienté à l'opposé de la pièce (110), et
dans lequel le côté intérieur (124c, 124d) de la paroi (114ad, 116a-d, 118a-d, 120a-d) comprend les un ou plusieurs sièges (122c, 122d).

3. Appareil (100 ; 300 ; 400) selon la revendication 1 ou 2, dans lequel le conducteur électrique (112a, 112b, 112c) est configuré pour l'interconnexion électrique d'unités d'éléments de batterie électrique (102a, 102b, 102c, 102d, 102e, 102f) de la pluralité d'unités d'éléments de batterie électrique (102a, 102b, 102c, 102d, 102e, 102f) qui appartiennent à différentes couches de batterie électrique (106a, 106b, 106c, 106d).

4. Appareil (100 ; 300 ; 400) selon la revendication 3, dans lequel l'appareil (100) comprend deux conducteurs électriques (112a, 112b, 112c) ou plus pouvant être connectés électriquement les uns aux autres, et
dans lequel les deux conducteurs électriques ou plus (112a, 112b, 112c) sont configurés pour l'interconnexion électrique d'unités d'éléments de batterie électrique (102a, 102b, 102c, 102d, 102e, 102f) de la pluralité d'unités d'éléments de batterie électrique (102a, 102b, 102c, 102d, 102e, 102f) qui appartiennent à différentes couches de batterie électrique (106a, 106b, 106c, 106d).

5. Appareil (100 ; 300 ; 400) selon la revendication 4, dans lequel les deux conducteurs électriques (112a, 112b, 112c) ou plus peuvent être fixés les uns aux autres.

6. Appareil (100 ; 300 ; 400) selon la revendication 4 ou 5, dans lequel les deux conducteurs électriques (112a, 112b, 112c) ou plus sont configurés pour être contigus les uns aux autres.

7. Appareil (100 ; 300 ; 400) selon l'une quelconque des revendications 4 à 6, dans lequel la paroi (414a-d, 416a-d, 418ad, 420a-d) forme une ouverture (456d) pour recevoir un organe de fixation (458) configuré pour fixer les uns aux autres deux conducteurs électriques (112a, 112b, 112c) ou plus.

8. Appareil (100 ; 300 ; 400) selon l'une quelconque des revendications 1 à 7, dans lequel les deux unités de logement (108a-d) ou plus peuvent être fixées les unes aux autres.

9. Appareil (100 ; 300 ; 400) selon l'une quelconque des revendications 1 à 8, dans lequel chacune des deux unités de logement (408c-d) ou plus forme une ouverture (456d) pour recevoir un organe de fixation (458) configuré pour fixer les uns aux autres deux conducteurs électriques (112a, 112b, 112c) ou plus.

10. Appareil (100 ; 300 ; 400) selon l'une quelconque des revendications 1 à 9, dans lequel le conducteur électrique (112a, 112b, 112c) comprend un premier organe électroconducteur (130a) et un ou plusieurs deuxièmes organes électroconducteurs (130b, 130c),
dans lequel le premier organe électroconducteur (130a) est configuré pour l'interconnexion électrique d'unités d'éléments de batterie électrique (102a, 102b, 102c, 102d, 102e, 102f) de la pluralité d'unités d'éléments de batterie électrique (102a, 102b, 102c, 102d, 102e, 102f) qui appartiennent à différentes couches de batterie électrique (106a, 106b, 106c, 106d), et
dans lequel les un ou plusieurs deuxièmes éléments électroconducteurs (130b, 130c) est/sont configuré/s pour connecter électriquement une unité d'éléments de batterie électrique (102a, 102b, 102c, 102d, 102e, 102f) de la pluralité d'unités d'éléments de batterie électrique (102a, 102b, 102c, 102d, 102e, 102f) au premier organe électroconducteur (130a).

11. Appareil (100 ; 300 ; 400) selon la revendication 10, dans lequel le premier organe électroconducteur (130a) a une extension longitudinale (131a),
dans lequel chacun (130b, 130c) des un ou plusieurs deuxièmes organes électroconducteurs (130b, 130c) a une extension longitudinale (131b, 131c),
dans lequel l'extension longitudinale (131a) du premier organe électroconducteur (130a) s'étend dans une première direction (132), et
dans lequel l'extension longitudinale (131b, 131c) des un ou plusieurs deuxièmes organes électroconducteurs (130b, 130c) s'étend dans une ou plusieurs deuxièmes directions (134, 136) transversales à la première direction (132).

12. Appareil (100 ; 300 ; 400) selon l'une quelconque des revendications 1 à 11, dans lequel les un ou plusieurs conducteurs électriques (112a, 112b, 112c) est/sont configuré/s pour l'interconnexion électrique d'unités d'éléments de batterie électrique (102a, 102b, 102c, 102d, 102e, 102f), chacune (102a, 102b, 102c, 102d, 102e, 102f) des unités d'éléments de batterie électrique (102a, 102b, 102c, 102d, 102e, 102f) comportant une pluralité d'éléments de batterie électrique (702).

13. Système électrique de véhicule (950) comprenant un ou plusieurs appareils (100 ; 300 ; 400) selon l'une quelconque des revendications 1 à 12.

14. Système électrique de véhicule (950) selon la revendication 13, dans lequel le système électrique de véhicule (950) comprend la pluralité d'unités d'éléments de batterie électrique (102a, 102b, 102c, 102d, 102e, 102f).

15. Véhicule (900) comprenant un ou plusieurs parmi le groupe constitué :
• d'un appareil (100 ; 300 ; 400) selon l'une quelconque des revendications 1 à 12 ; et
• d'un système électrique de véhicule (950) selon la revendication 13 ou 14.
